# EUROPÄISCHE PATENTSCHRIFT

(11) **EP 4 086 490 B1**
(45) Veröffentlichungstag und Bekanntmachung des Hinweises auf die Patenterteilung: **25.06.2025**
(21) Anmeldenummer: 21214826.6
(22) Anmeldetag: 15.12.2021
(51) Int. Cl.: F01P 7/16

(54) **KFZ-WEGEVENTIL ZUM EINSTELLEN EINER FLUIDSTRÖMUNG**
MOTOR VEHICLE DIRECTIONAL CONTROL VALVE FOR ADJUSTING A FLUID FLOW
SOUPAPE DIRECTIONNELLE DE VÉHICULE À MOTEUR PERMETTANT DE RÉGLER UN ÉCOULEMENT DE FLUIDE

(30) Priorität: 05.01.2021 DE 102021100075
(43) Veröffentlichungstag der Anmeldung: 09.11.2022
(73) Patentinhaber: WOCO Industrietechnik GmbH, 63628 Bad Soden-Salmünster (DE)
(72) Erfinder: Ludwig, Uwe, 63628 Bad Soden-Salmünster (DE)
(74) Vertreter: Angerhausen, Christoph

(56) Entgegenhaltungen:
- DE-A1- 102014 004 296
- DE-U1- 202014 008 139
- US-A1- 2020 386 331

## Beschreibung

Die vorliegende Erfindung betrifft ein Wegeventil, insbesondere ein Mehrwegeventil, wie ein 3/2- oder 4/2-Wegeventil, zum Einstellen einer Fluidströmung, wie einer Kühlmittelströmung, beispielsweise eines Kraftfahrzeugs. Des Weiteren betrifft die vorliegende Erfindung ein KFZ-Fluidströmungsleitsystem, wie ein KFZ-Thermomanagementsystem, mit einem derartigen Stellventil.

Gattungsgemäße Mehrwegeventile werden beispielsweise im Kraftfahrzeug zu dessen Thermomanagement eingesetzt und dienen insbesondere dazu, Kühlmittel, wie Wasser oder Öle, zu leiten. Bei den bekannten Mehrwegeventilen mit Drehkolben als Ventilglied bestehen Dichtungsprobleme und hohe Reibungskräfte zwischen Ventilglied und Ventilgehäuse, insbesondere Ventilsitz. Daher müssen relativ leistungsstarke Aktuatoren zum Betätigen der Ventilglieder eingesetzt werden.

Ein KFZ-Mehrwegeventil mit einem Drehkolben-Ventilglied ist beispielsweise in DE202017000564U1 offenbart. Das Ventilgehäuse weist mehrere Fluidanschlussstutzen auf, die radial zur Rotationsrichtung des Ventilglieds orientiert sind. Von radial außen her sind mehrteilige Dichtungspakete bestehend aus einem hülsenförmigen Halter, einem Dichtungselement aus Elastomer und einer Aufnahmehülse, die den Halter und das Dichtungselement aufnimmt. Am Innenumfang der Fluidanschlussstutzen sind Führungen für die Dichtungspakete vorgesehen, welche so positionierbar sind, dass die Dichtungselemente dem Innenraum des Ventilgehäuses zugewandt sind. Ferner weisen die Dichtungselemente eine Krümmung auf, sodass deren dem Innenraum zugewandte Dichtungsflächen an einen Innenradius des Ventilgehäuseinnenraums angepasst sind.

An dem KFZ-Mehrwegeventil gemäß DE202017000564U1 haben sich vor allem dessen hohe Teilezahl und aufwändige Montage als nachteilig erwiesen. Darüber hinaus lässt die Ausgestaltung nur eine vorgegebene Montage des Dichtungspakets zu. Auch bei der Ausgestaltung des Dichtungspakets besteht so gut wie kein Gestaltungsspielraum. Beispielsweise ist es nicht möglich, mittels des Dichtungspakets weitere Ventilgehäuseinnenraumflächen abzudecken bzw. auszukleiden.

Ferner sind aus DE102016118133A1 und EP2314900A1 Mehrwegventile mit einem zweiteiligen Ventilglied bestehend aus einem Verschlussteil und einem Stellteil bekannt, wobei an dem Verschlussteil stirnseitig Dichtungselemente angeordnet ist. Bei DE102016118133A1 ist die Dichtung durch eine Beschichtung mit einer dichtenden Wirkung realisiert. Daran hat sich vor allem als Nachteil erwiesen, dass die Oberfläche des Dichtteils großflächig beschichtet werden muss. Ferner weist die Beschichtung keinerlei Elastizität zum verbesserten Ausbilden eines Dichtkontakts auf. Bei EP2314900A1 ist ein Dichtungsring in einer in dem Dichtteil vorgesehenen Nut angeordnet, der mit dem Ventilgehäusesitz in Kontakt gelangen kann. Zum einen hat sich das Montieren von dünnen und wenig formstabilen Dichtungs-O-Ringen als unvorteilhaft erwiesen. Zum anderen tendieren die O-Ringe dazu, aus der Nut sich zu lösen, wenn diese nicht durch zusätzliche aufwändige Befestigungsmittel gehalten werden. Die DE 20 2014 008 139 U1 offenbart ein Mehrwegeventil zur Steuerung von Flüssigkeitskreisen. Die US 2020/0386331 A1 offenbart eine Fluidventilbaugruppe mit einem Ventilkörper, der Dichtungsrückhaltekrallen aufweist.

DE102014004296A1 offenbart ein Wegeventil in Gestalt eines Kugelhahns mit Dichtungen, die durch Spritzgießen einstückig mit einem zugeordneten Gehäuseteil verbunden sind.

Es ist Aufgabe der vorliegenden Erfindung, die Nachteile des Standes der Technik zu überwinden, insbesondere ein Wegeventil für eine Kraftfahrzeugfluidströmung dahingehend zu verbessern, dass eine einfachere und/oder flexiblere Montage einer Dichtung an Ventilgehäuse und/oder Ventilglied insbesondere mit verbesserter Montagefestigkeit möglich ist.

Diese Aufgabe wird durch die Merkmale der unabhängigen Ansprüche gelöst.

Danach ist ein Wegeventil zum Einstellen einer Fluidströmung, wie einer Kühlmittelströmung, insbesondere zwischen wenigstens zwei Schaltzuständen bereitgestellt. Bei dem Wegeventil kann es sich beispielsweise um ein Mehrwegeventil, wie ein 3/2- oder ein 4/2-Wegeventil, handeln. Das erfindungsgemäße Wegeventil wird beispielsweise im Kraftfahrzeug zu dessen Thermomanagement eingesetzt. Bei dem Wegeventil kann es sich demnach um ein KFZ-Wegeventil, insbesondere ein KFZ-Thermomanagementventil, wie ein KFZ-Kühlmittelregelventil, handeln, welches beispielsweise in einem KFZ-Fluidströmungsleitsystem, wie einem KFZ-Thermomanagementleitsystem, insbesondere einem KFZ-Kühlkreislauf, eingesetzt wird. Bei der Fluidströmung kann es sich beispielsweise um Kühlmittel, Wasser, Öl oder dergleichen, handeln.

Das erfindungsgemäße Wegeventil umfasst ein Ventilgehäuse. Das Ventilgehäuse kann einen Ventilraum begrenzen, durch den die Fluidströmung hindurchgeführt werden kann und/oder in dem ein Ventilglied zum Einstellen der verschiedenen Schaltzustände bewegbar gelagert sein kann. Das Ventilgehäuse kann wenigstens zwei, insbesondere drei oder vier, Fluidanschlüsse, wie Öffnungen oder Durchgänge, insbesondere wenigstens einen Fluideingang und wenigstens einen Fluidausgang, aufweisen.

Des Weiteren umfasst das Wegeventil ein stellbares Ventilglied. Beispielsweise kann das Ventilglied an einen Stellantrieb insbesondere kraftübertragungsgemäß gekoppelt sein, welcher zum Betätigen beziehungsweise Stellen des Ventilglieds ausgelegt ist. Bei dem Ventilglied kann es sich beispielsweise um einen bezüglich einer Drehstellachse drehbar gelagerten Drehkolben handeln. Des Weiteren ist es möglich, dass das Ventilglied ein bezüglich einer Stellachse translatorisch gelagerter Schieber ist.

Erfindungsgemäß umfasst das Wegeventil ferner eine in eine Montagrichtung in einer Dichtungsaufnahme des Ventilglieds oder des Ventilgehäuses montierte Dichtung. Die Dichtung und die Dichtungsaufnahme greifen zum Verhindern eines sich Entfernens von Dichtung und Ventilglied oder Ventilgehäuse entgegen der Montagerichtung formschlüssig ineinander ein. Durch den Formschlusseingriff zwischen der Dichtung und Dichtungsaufnahme ist die Relativbewegungsfreiheit im Montagezustand entgegen der Montagerichtung verhindert. Auf diese Weise ist während des Betriebs des Wegeventils sichergestellt, dass die Dichtung zuverlässig innerhalb der Dichtungsaufnahme verbleibt. Des Weiteren kann aufgrund des Formschlusseingriffs auf zusätzliche Befestigungsmittel beziehungsweise -maßnahmen, wie Haftvermittler oder dergleichen, verzichtet werden.

In einer beispielhaften Ausführung des Wegeventils sind die Dichtungsaufnahme und die Dichtung derart aufeinander formabgestimmt, dass sich die Dichtung und die Dichtungsaufnahme in Bezug auf die Montagerichtung widerhakenartig hintergreifen. Mit anderen Worten weist entweder die Dichtungsaufnahme oder die Dichtung, oder beide, eine Widerhakenstruktur auf, welche in Bezug auf die Montagerichtung die jeweils andere Komponente hintergreift. Beispielsweise können die Dichtungsaufnahme und/oder die Dichtung einen quer zur Montagerichtung orientierten, insbesondere vorstehenden oder zurückversetzten, Widerhaken aufweisen, der eine Bewegungsblockade für die jeweils andere Komponente darstellt. Für das Verständnis im Sinne der vorliegenden Anmeldung des Begriffs Widerhaken ist es ausreichend, dass sich dieser quer zur Montagerichtung erstreckt, wobei es auch möglich ist, dass dieser sich sowohl quer zur Montagerichtung erstreckt als auch entgegen der Montagerichtung rückwärts gerichtet ist.

In der erfindungsgemäßen Ausführung des Wegeventils ist die Dichtung aus einem Stück mittels eines Spritzgussverfahrens, hergestellt. Insbesondere weist die Dichtung eine aus einem Stück damit hergestellte Widerhakenstruktur auf, mittels der die Dichtung fest, insbesondere haftvermittlerfrei und/oder frei von weiteren Befestigungsmitteln beziehungsweise -maßnahmen, an dem Ventilglied oder dem Ventilgehäuse angebracht ist. Somit lässt sich auf herstellungstechnisch einfache Art und Weise eine besonders widerstandsfähige Dichtung erzeugen, die einfach zu montieren ist und gleichzeitig positionsfest an dem Ventilglied oder dem Ventilgehäuse in der entsprechenden Dichtungsaufnahme befestigt ist. Erfindungsgemäß ist die Dichtung in die Dichtungsaufnahme eingespritzt. Die Herstellung kann somit derart erfolgen, dass ein Spritzgusswerkzeug dem Ventilglied oder dem Ventilgehäuse, je nachdem in welcher Komponente die Dichtungsaufnahme ausgebildet ist, zugeführt wird und das Spritzgussmaterial, insbesondere das Kunststoffmaterial, so in die Dichtungsaufnahme eingespritzt wird, dass zugleich mit der Herstellung der Dichtung dessen positionssichere, insbesondere widerhakenartig hintergreifende, Befestigung in der Dichtungsaufnahme realisiert wird.

Gemäß einer weiteren beispielhaften Ausführung des Wegeventils ist die Widerhakenstruktur als insbesondere rotationsförmiger von der Dichtung vorstehender Vorsprung gebildet, der einen Stegabschnitt insbesondere konstanten Durchmessers und einen gegenüber dem Stegabschnitt quer zur Längserstreckung des Vorsprungs vorstehenden, insbesondere umlaufenden, Halteabschnitt aufweist. Der quer zur Längserstreckung vorstehende, insbesondere radial vorstehende, Halteabschnitt kann sich im Montagezustand in der Dichtungsaufnahme somit mit dem Ventilglied oder dem Ventilgehäuse verhaken, sodass eine Bewegungsblockade zum Verhindern eines sich Entfernens der Dichtung von dem Ventilglied beziehungsweise von dem Ventilgehäuse gebildet ist. Die Herstellung von Stegabschnitt und vorstehendem Halteabschnitt kann beispielsweise über das Spritzgussverfahren realisiert werden, in dem die Dichtungsaufnahme mit einer Stegaufnahme und einer gegenüber der Stegaufnahme quer zur Längserstreckungsrichtung, insbesondere radial, vorstehenden Halteaufnahme versehen wird, welche im Spritzgussverfahren mit dem Spritzgussmaterial, insbesondere Kunststoffmaterial, ausgefüllt werden, sodass sich der Formschlusseingiff, insbesondere die Verhakungsstruktur, bereits während der Herstellung ausbildet.

In einer weiteren beispielhaften Ausführung des Wegeventils weist die Dichtung wenigstens zwei, insbesondere eine Vielzahl von in einem insbesondere gleichmäßigen Abstand zueinander angeordnete, insbesondere gleich geformte, Vorsprünge auf. Auf diese Weise lässt sich die Befestigungskraft, insbesondere Verhakungskraft, zwischen Dichtung und Dichtungsaufnahme beziehungsweise Ventilglied oder Ventilgehäuse verteilen. Die wenigstens zwei so gebildeten Befestigungsanker wirken besonders effektiv einer ungewollten Demontage der Dichtung entgegen. Beispielsweise ist die Dichtung als Dichtungsring realisiert. Die wenigstens zwei, insbesondere die Vielzahl an, Vorsprüngen können somit ringartig zueinander angeordnet sein.

In einer beispielhaften Weiterbildung des Wegeventils ist die Dichtungsaufnahme ringförmig, insbesondere ringnutförmig, ausgebildet. Die Dichtungsaufnahme kann durch eine gegenüber einer Fläche, beispielsweise einer stirnseitigen Fläche des Ventilglieds oder einer Ventilgehäuseinnenwand, zurückversetzte Nut oder Vertiefung realisiert sein, aber auch durch einen insbesondere vordefinierten Flächenabschnitt, insbesondere ohne einer Nut oder Vertiefung, gegeben sein, welcher zum Empfangen und/oder zum Anliegen der Dichtung vorgesehen ist. Gemäß einer beispielhaften Weiterbildung weist die Dichtungsaufnahme wenigstens eine Formschlussöffnung zum Empfangen des Vorsprungs, bezüglich der der wenigstens eine Vorsprung der Dichtung formabgestimmt ist, auf. Beispielsweise umfasst die Dichtungsaufnahme wenigstens zwei, insbesondere eine Vielzahl von in einem insbesondere gleichmäßigen Abstand zueinander angeordnete, insbesondere gleich geformte, Formschlussöffnungen auf. In einer beispielhaften Ausführung entspricht die Anzahl der Formschlussöffnungen der Anzahl der Dichtungsvorsprünge. Für den Fall, dass die Dichtung mittels eines Spritzgussverfahrens hergestellt und in die Dichtungsaufnahme eingespritzt wird, passt sich die Anzahl der Dichtungsvorsprünge während der Herstellung automatisch an die Anzahl der vorgesehenen Formschlussöffnungen in dem Ventilglied- beziehungsweise dem Ventilgehäuse an.

Gemäß einer beispielhaften Weiterbildung ist die Formschlussöffnung derart geformt, dass sich der Dichtungsvorsprung und die Dichtungsaufnahmeformschlussöffnung in Bezug auf die Montagerichtung der Dichtung widerhakenartig hintergreifen. Beispielsweise kann die Dichtungsaufnahme als Ringnut geformt sein und die Dichtung im Wesentlichen eine Ringform, insbesondere einen ringförmigen Dichtungsgrundkörper, besitzen. Zum widerhakenartigen Hintergreifen dienen der von dem Dichtungsgrundkörper vorstehende Dichtungsvorsprung und die Dichtungsaufnahmeformschlussöffnung, die entsprechend auf einander formabgestimmt sind, was beispielsweise über das Spritzgussverfahren auf herstellungstechnisch einfache Art und Weise erreicht werden kann. Der Dichtungsgrundkörper der Dichtung kann hauptsächlich zum Ausbilden des Dichtkontakts mit dem entsprechenden zu kooperierenden Bauteil dienen. Mit anderen Worten wird die Dichtung so an dem Ventilglied beziehungsweise dem Ventilgehäuse angeordnet, dass dessen Dichtungsgrundkörper der jeweils anderen Komponente zugewandt beziehungsweise zugeordnet ist und die Widerhakenstruktur rückseitig beziehungsweise von der jeweils anderen Komponente abgewandt ist.

Gemäß einer weiteren beispielhaften Weiterbildung weist die Formschlussöffnung eine dem Stegabschnitt der Dichtung zugeordnete Stegaufnahme und eine dem Halteabschnitt zugeordnete, gegenüber der Stegaufnahme quer zur Längserstreckung der Formschlussöffnung vorstehende, insbesondere umlaufende, Halteaufnahme auf. Die Stegaufnahme und der Stegabschnitt und/oder die Halteaufnahme und der Halteabschnitt können aufeinander formabgestimmt sein.

In einer weiteren beispielhaften Ausführung des Wegeventils ist die Dichtungsaufnahme randnah in einem zum Einnehmen eines Dichtkontakts mit dem Ventilgehäuse eingerichteten Dichtteil des Ventilglieds, insbesondere an dessen dem Ventilgehäuse zugewandten Stirnseite oder Dichtkontaktfläche, angeordnet oder fluidöffnungsnah in einer die wenigstens zwei Fluidöffnungen begrenzenden Ventilgehäusewand ausgebildet. Die lokale Zuordnung der Dichtungsaufnahme und damit der Dichtung zu den für die Abdichtung beziehungsweise den Schließzustand des Wegeventils kritischen Position hat den Vorteil, dass zum einen die bestmögliche Abdichtwirkung erreicht wird und zum anderen ein kostengünstiges Wegeventil hergestellt werden kann, da die Dichtung nur dort vorgesehen werden muss, wo sie tatsächlich benötigt wird. Es wurde herausgefunden, dass die kritischen Positionen zum einen radial außenseitig, also randnah, am Dichtteil des Ventilglieds und/oder unmittelbar angrenzend, also fluidöffnungsnah, in der Ventilgehäusewand gegeben sind.

Gemäß einem weiteren Aspekt der vorliegenden Erfindung, der mit den vorhergehenden Aspekten und beispielhaften Ausführungen kombinierbar ist, ist ein Wegeventil zum Einstellen einer Fluidströmung, wie einer Kühlmittelströmung, insbesondere zwischen wenigstens zwei Schaltzuständen bereitgestellt. Bei dem Wegeventil kann es sich beispielsweise um ein Mehrwegeventil, wie ein 3/2- oder ein 4/2-Wegeventil, handeln. Das erfindungsgemäße Wegeventil wird beispielsweise im Kraftfahrzeug zu dessen Thermomanagement eingesetzt. Bei dem Wegeventil kann es sich demnach um ein KFZ-Wegeventil, insbesondere ein KFZ-Thermomanagementventil, wie ein KFZ-Kühlmittelregelventil, handeln, welches beispielsweise in einem KFZ-Fluidströmungsleitsystem, wie einem KFZ-Thermomanagementleitsystem, insbesondere einem KFZ-Kühlkreislauf, eingesetzt wird. Bei der Fluidströmung kann es sich beispielsweise um Kühlmittel, Wasser, Öl oder dergleichen, handeln.

Das erfindungsgemäße Wegeventil umfasst ein Ventilgehäuse. Das Ventilgehäuse begrenzt einen Ventilraum, durch den die Fluidströmung hindurchgeführt werden kann und/oder in dem ein Ventilglied zum Einstellen der verschiedenen Schaltzustände bewegbar gelagert sein kann. Das Ventilgehäuse weist wenigstens zwei, insbesondere drei oder vier, Fluidanschlüsse, wie Öffnungen oder Durchgänge, insbesondere wenigstens einen Fluideingang und wenigstens einen Fluidausgang, auf. Die wenigstens zwei Fluidöffnungen sind mit einem von dem Ventilgehäuse begrenzten Ventilinnenraum fluidal verbunden. Die Fluidströmung kann durch den Ventilinnenraum hindurchgeführt werden. Des Weiteren umfasst das Ventilgehäuse wenigstens eine Dichtungsaufnahme. Die Dichtungsaufnahme ist dazu ausgelegt, eine Dichtung zu empfangen, die einen Dichtkontakt mit einem Ventilglied des Wegeventils ausbilden kann.

Des Weiteren umfasst das Wegeventil ein stellbares Ventilglied. Beispielsweise kann das Ventilglied an einen Stellantrieb insbesondere kraftübertragungsgemäß gekoppelt sein, welcher zum Betätigen beziehungsweise Stellen des Ventilglieds ausgelegt ist. Bei dem Ventilglied kann es sich beispielsweise um einen bezüglich einer Drehstellachse drehbar gelagerten Drehkolben handeln. Des Weiteren ist es möglich, dass das Ventilglied ein bezüglich einer Stellachse translatorisch gelagerter Schieber ist. Das Ventilglied ist dazu eingerichtet und derart dem Ventilgehäuse zugeordnet, dass zum Schließen der Fluidöffnungen das Ventilglied mit einer in der Dichtungsaufnahme anzuordnenden oder angeordneten Dichtung in einen Dichtkontakt gelangt. Zur Ausbildung des Dichtkontakts kann sich ein insbesondere radialer Anpressdruck zwischen Ventilglied und Dichtung aufbauen.

Gemäß der vorliegenden Erfindung umfasst das Wegeventil ferner eine mittels eines Spritzgussverfahrens, insbesondere mittels eines Kunststoffspritzgussverfahrens, vom Innenraum her in die wenigstens eine Dichtungsaufnahme eingespritzte und aus einem Stück hergestellte Dichtung auf. Durch das Spritzgussverfahren ist es auf besonders herstellungstechnisch einfache Art und Weise möglich, zum einen eine Dichtung herzustellen und zum anderen bereits während der Herstellung gleichzeitig die Montage vorzunehmen, nämlich dadurch, dass die Dichtung in dessen Montageposition eingespritzt wird. Die Verwendung des Spritzgussverfahrens ermöglicht es ferner, auf Befestigungsmittel beziehungsweise -maßnahmen verzichten zu können. Über das Spritzgussverfahren kann auf einfache Weise eine Formschlussverbindung beziehungsweise eine Widerhakenstruktur hergestellt werden, sodass insbesondere auf Haftvermittler zum Befestigen der Dichtung an dem Ventilglied verzichtet werden kann. Darüber hinaus lassen sich mittels des Spritzgussverfahrens flexible Dichtungsgeometrien erzeugen, um Dichtungen für verschiedene Anforderungen und Wegeventilgeometrien herstellen zu können. Ein Vorteil des Einspritzens der Dichtung vom Ventilinnenraum her besteht auch darin, dass übergreifend über verschiedene Wegeventiltypen beziehungsweise Einsatzgebiete die Außenform, die Anschlüsse, etc. des Wegeventils gleich ausgebildet sein können und je nach Einsatzgebiet, Anforderungen, wie zum Beispiel Durchfluss, Druckabfall, etc., die Innenkontur beziehungsweise - geometrie des Ventilgehäuses individuell angepasst werden kann. Mittels des Spritzgussverfahrens kann flexibel auf derartige Änderungen der Innengeometrie des Wegeventils reagiert werden und gleichermaßen mit hoher Qualität und kostengünstig eine entsprechende Dichtung hergestellt und vor allem auch zuverlässig an der Ventilgehäusewand befestigt werden.

In einer beispielhaften Ausführung ist die Dichtung so geformt, dass die Dichtung an eine Innenkontur der Ventilgehäusewand formangepasst ist, insbesondere kontinuierlich und/oder vorsprungfrei in die Wandungskontur übergeht. Mit anderen Worten kann die Dichtungsaufnahme bezüglich der Wandungskontur der Ventilgehäusewand zurückversetzt sein, sodass die Dichtung ebenfalls bezüglich der Wandungskontur zurückversetzt ist und/oder bündig in diese übergeht.

Gemäß einer weiteren beispielhaften Weiterbildung des Wegeventils ist die Dichtung derart in der wenigstens einen Dichtungsaufnahme angeordnet, dass eine Rotation der Dichtung relativ zur Dichtungsaufnahme bezüglich der Stellachse des Ventilglieds und/oder eine Translation der Dichtung relativ zur Dichtungsaufnahme in Richtung der Stellachse verhindert sind/ist. Dadurch ist sichergestellt, dass die Dichtung stets in der korrekten Position ist, um bestmöglich einer Abdichtung und damit ein Verschließen der gewünschten Fluidöffnung sicherzustellen.

Erfindungsgemäß bilden die Dichtung und die Dichtungsaufnahme einen Formschlusseingriff insbesondere in Form einer Feder-Nut-Verbindung aus. Der Formschlusseingriff kann so ausgebildet sein, dass ein sich entfernen von Dichtung und Dichtungsaufnahme entgegen der Montagerichtung beziehungsweise der Einspritzrichtung verhindert ist.

Gemäß einer weiteren beispielhaften Ausführung des Wegeventils kleidet die Dichtung die Ventilgehäusewand großflächig, insbesondere wenigstens 50 %, wenigstens 60 %, wenigstens 70 % oder wenigstens 80 %, der Ventilgehäusewand, aus. Die Dichtung kann ferner mit einer die Haftreibung zwischen der Dichtung und dem Ventilglied vermindernden Beschichtung versehen sein. Beispielsweise kann die Dichtung inklusive der Beschichtung in einem 2-Komponenten-Spritzgussverfahren hergestellt sein. Ferner ist es möglich, dass die die Haftreibung vermindernde Beschichtung abschnittsweise an denjenigen Abschnitten der Ventilgehäusewand vorgesehen ist, in denen das Ventilglied keinen Schließzustand einnimmt, sondern die einem Öffnungszustand zugeordnet sind beziehungsweise einer Bewegungsamplitude des Ventilglieds zugeordnet sind.

Gemäß einem weiteren Aspekt der vorliegenden Erfindung, der mit den vorgehenden Aspekten und beispielhaften Ausführungen kombinierbar ist, umfasst das Wegeventil eine Kulissenführung, die dazu eingerichtet ist, das Ventilglied in einen Dichtkontakt-Schaltzustand mit dem Ventilgehäuse zu drängen und in einen bezüglich des Dichtkontakt-Schaltzustands zurückversetzten Freigabe-Schaltzustand zu führen. Beim Einnehmen des Dichtkontakt-Schaltzustands drängt die Kulissenführung das Ventilglied gegen das Ventilgehäuse, sodass eine zwischen Ventilglied und Ventilgehäuse bestehende Haftreibung insbesondere kontinuierlich erhöht wird. Beispielsweise ist der Dichtkontakt-Schaltzustand einem der Fluidanschlüsse im Ventilgehäuse zugeordnet. Beim Verlassen des Dichtkontakt-Schaltzustands führt die Kulissenführung das Ventilglied weg von dem Ventilgehäuse, sodass die zwischen Ventilgehäuse und Ventilglied bestehende Haftreibung sich wieder insbesondere kontinuierlich abbaut.

Ein Vorteil dieses Aspekts besteht darin, dass auf konstruktiv einfach zu realisierende und herzustellende Weise eine besonders reibungsarme Bewegung des Ventilglieds innerhalb des Ventilgehäuses ermöglicht ist. Insofern zeichnet sich das erfindungsgemäße Wegeventil durch einen geringen Verschleiß und eine Langlebigkeit aus. Aufgrund der geringen Reibungskraft beim Stellen des Ventilglieds kann auf kostengünstigere und/oder leistungsärmere Stellantriebe zum Betätigen des Stellglieds zurückgegriffen werden. Sofern der Dichtkontakt-Schaltzustand einem zu verschließenden Fluidanschluss zugeordnet ist, erfüllt die erfindungsgemäße Kulissenführung zwei vorteilhafte Funktionen: zum einen wird während des Verstellens des Ventilglieds einen reibungsarme, geführte Bewegung des Ventilglieds ermöglicht und zum anderen wird zum Verschließen des entsprechenden Fluidanschlusses eine gesteigerte Reibungskraft über die Kulissenführung zum fluiddichten Verschließen des entsprechenden Fluidanschlusses aufgebaut. Da nur im Verschlussbereich, also im Dichtkontakt-Schaltzustand, ein Anpressdruck zwischen Ventilglied und Ventilgehäuse entsteht, verläuft die Stellbewegung des Ventilglieds im Wesentlichen reibungsfrei, sodass auch auf zusätzliche Gleit- und/oder Dichtmaßnahmen verzichten werden kann. Durch die geführte Bewegung beim Stellen des Ventilglieds mittels der Kulissenführung wird quasi automatisch zum Aufbau des Anpressdrucks insbesondere im Verschlussbereich zum Verschließen eines Fluidanschlusses das Ventilglied in den Dichtkontakt-Schaltzustand mit dem Ventilgehäuse gedrängt und ebenso quasi automatisch aus dem Dichtkontakt-Schaltzustand heraus zurückgeführt.

Sofern es sich um einen bezüglich einer Rotationsachse drehbar gelagerten Drehkolben handelt, kann unter "drängen" verstanden werden, dass die Kulissenführung das Ventilglied aus der rein rotatorischen Translationsbewegung heraus nach radial außen drängt, um in den Dichtkontakt-Schaltzustand mit dem Ventilgehäuse zu gelangen, also um einen radialen Abstand zwischen Ventilglied und Ventilgehäuse zu überwinden. Unter dem "zurückversetzten Freigabezustand" kann verstanden werden, dass die Kulissenführung das Ventilglied wieder insbesondere nach radial innen in die im Wesentlichen rein rotatorische Drehstellbewegung zurückführt. Bezüglich der Schieber-Ventilgliedausführung kann die Kulissenführung das Ventilglied quer, insbesondere senkrecht, zur translatorischen Stellbewegung abdrängen, um es mit dem Ventilgehäuse in den Dichtkontakt-Schaltzustand zu drängen. Beim Zurückversetzen aus dem Dichtkontakt-Schaltzustand heraus kann die Kulissenführung das Schieber-Ventilglied wieder zurück auf die translatorische Stellbewegungsrichtung bzw. -bahn führen.

In einer beispielhaften nicht beanpruchten Ausführung weist die Kulissenführung einen in dem Ventilgehäuse, insbesondere einem Ventilgehäuseboden, ausgebildeten Kulissenpfad auf, in dem das Ventilglied geführt ist. Beispielsweise ist der Kulissenpfad aus einem Stück mit dem Ventilgehäuse hergestellt. Beim Stellen des Ventilglieds fährt diese den Kulissenpfad ab beziehungsweise entlang des Kulissenpfads insbesondere zwischen den wenigstens zwei Schaltzuständen und wird während der Stellbewegung in vorbestimmten Dreh- oder Axialpositionen, je nach Ventilgliedausführung, in einen Dichtkontakt-Schaltzustand gedrängt und wieder aus diesem heraus geführt. Dadurch, dass der Kulissenpfad am Ventilgliedgehäuse angeordnet beziehungsweise sogar einstückig mit diesem ausgebildet sein kann, ist eine besonders konstruktiv einfache Ausführung der Kulissenführung bereitgestellt.

Gemäß einer weiteren nicht beanspruchten Ausführung verläuft der Kulissenpfad derart, dass beim Einnehmen des Dichtkontakt-Schaltzustands das Ventilglied quer zu seiner Stellachse in Richtung einer Dichtkontaktfläche, die beispielsweise durch einen Ventilsitz festgelegt und/oder gebildet sein kann, des Ventilgehäuses umgelenkt wird. Bei einem Drehkolben-Ventilglied kann das Ventilglied radial zur Drehstellachse umgelenkt werden. Bei einem Schieber-Ventilglied kann das Schieber-Ventilglied quer zur Translationsstellachse umgelenkt werden. Die Dichtkontaktfläche des Ventilgehäuses kann beispielsweise von einem Ventilsitz gebildet sein. Beispielsweise ist der Ventilsitz einem Fluidanschluss zugeordnet.

Gemäß einer weiteren beispielhaften nicht beanspruchten Ausführung eines Wegeventils weist die Kulissenführung eine Andrücknase auf, die sich in den Kulissenpfad hinein erstreckt, sodass beim Überfahren der Andrücknase, beispielsweise beim Vorbeifahren des Ventilglieds an der Andrücknase, durch das Ventilglied dieses von der Andrücknase in den Dichtkontakt-Schaltzustand gedrängt wird. Die Andrücknase kann demnach eine Ausweich-Bewegung des Ventilglieds bewirken, wobei eine Abmessung der Andrücknase und damit ein Bewegungsausgleich des Ventilglieds auf einen zu überbrückenden Abstand zwischen Ventilglied und Ventilgehäuse abgestimmt ist, welcher zum Einnehmen des Dichtkontakt-Schaltzustands überwunden werden muss. Beispielsweise kann die Kulissenführung zwei, drei oder vier in einem Abstand zueinander angeordnete Andrücknasen umfassen. Dabei kann je eine Andrücknase je einem Fluidanschluss zugewiesen sein. Somit kann gewährleistet sein, dass die Kulissenführung des Ventilglieds jeweils im Bereich eines Fluidanschlusses in Richtung des Ventilglieds zum Ausbilden eines Dichtkontakt-Schaltzustands drängt, um den entsprechenden Fluidanschluss fluiddicht zu verschließen. Der Dichtkontakt-Anpressdruck zwischen Ventilglied und Ventilgehäuse wird folglich nur in den entsprechenden Verschlussbereichen bei den Fluidanschlüssen aufgebaut, also nur dann, wenn dieser auch notwendig ist. Beim restlichen Stellbewegungsbereich, insbesondere Rotations- bzw. Dreh- oder Translationsbewegungsbereich, des Ventilglieds kann dieses im Wesentlichen reibungsfrei verlaufen.

Gemäß einer weiteren nicht beanspruchten Ausführung eines Wegeventils ist der Kulissenpfad durch eine in das Ventilgehäuse eingebrachte, insbesondere im Ventilgehäuseboden, Führungsnut gebildet. Des Weiteren weist das Ventilglied einen als Kulissenstein fungierenden, mit der Führungsnut zusammenwirkenden Führungsvorsprung auf. Beim Stellen des Ventilglieds wird der Führungsvorsprung des Ventilglieds in der Führungsnut des Ventilgehäuses geführt. Mit anderen Worten ragt der Führungsvorsprung in die Führungsnut beziehungsweise greift in diese ein. Ein Querschnitt des Führungsvorsprungs kann an einen Innenquerschnitt der Führungsnutform angepasst sein.

In einer beispielhaften nicht beanpsruchten Ausführung eines Wegeventils ist die Führungsnut in Bezug auf die Drehstellachse des als Drehkolben ausgebildeten Ventilglieds im Wesentlichen ringförmig ausgebildet und weist eine, insbesondere zwei, drei oder vier in Umfangsrichtung insbesondere gleichmäßig verteilte, Weiche auf, die das Ventilglied zum Einnehmen des Dichtkontakt-Schaltzustands aus dem ringförmigen, regulären Kulissenpfad umlenkt beziehungsweise abdrängt. Im Falle eines translatorisch stellbaren Schieber-Ventilglieds kann die Führungsnut im Wesentlichen parallel zur Translationsstellachse ausgerichtet sein und eine, insbesondere zwei, drei oder vier in Translationsstellrichtung, insbesondere gleichmäßig verteilte, Weiche aufweisen, die das Schieber-Ventilglied quer zur Translations-Stellachse umlenkt beziehungsweise abdrängt. Die wenigstens eine weiche kann ferner derart geformt sein und/oder gewährleisten, dass das Ventilglied zurück auf den regulären ringförmigen oder regulären geradlinigen Stellpfad zurückgeführt wird.

Gemäß einem weiteren nicht beanspruchten Aspekt, der mit den vorhergehenden Aspekten und beispielhaften Ausführungen kombinierbar ist, umfasst das Ventilglied ein mit einem Stellantrieb zum Betätigen des Ventilglieds insbesondere kraftübertragungsgemäß zu verbindendes Stellteil und ein Dichtteil zum Einnehmen eines Dichtkontakts mit dem Ventilgehäuse auf. Das Stellteil und das Dichtteil können separate, insbesondere separat hergestellte, Komponenten sein.

Gemäß diesem Aspekt ist das Dichtteil mittels einer Schienenführung beweglich relativ zu dem Stellteil gelagert. Das Stellteil kann diejenige Komponente sein, die unmittelbar durch den Stellantrieb betätigt wird, während das Dichtteil ohne separaten Antrieb an dem Stellteil gelagert ist. Eine relative Bewegungsmöglichkeit des Dichtteils relativ zu dem Stellteil ist über die Schienenführung ermöglicht, die beispielsweise beim Stellen des Ventilglieds, also beim Bewegen des Ventilglieds zwischen den verschiedenen Schaltzuständen, zwischen einem Dichtkontakt-Schaltzustand bewegt werden kann, bei dem das Dichtteil derart über die Schienenführung relativ zu dem Stellteil positioniert ist, dass ein insbesondere erhöhter Reibkontakt zwischen Ventilglied und Ventilgehäuse, insbesondere Ventilsitz, beispielsweise im Bereich eines Fluidanschlusses, entsteht. Die Schienenführung ermöglicht auf kostengünstig und einfach zu realisierende Weise eine Entkopplung von Stellteil und Dichtteil, sodass über die Schienenführung flexibel die Relativbewegungsmöglichkeit des Stellteils bezüglich des Dichtteils einstellbar ist, um einen gewünschten Dicht-Anpressdruck an einer bestimmten Position, insbesondere in einer bestimmten Rotations- oder Drehstellung des Ventilglieds oder bei einer bestimmten axialen Stellposition, aufzubauen. Somit kann auf konstruktiv einfach zu realisierende und herzustellende Weise ein besonders reibungsarmes Einnehmen des Dichtkontakts innerhalb des Ventilgehäuses ermöglicht sein. Insofern zeichnet sich das oben beschriebene Wegeventil durch einen geringen Verschleiß und eine höhere Langlebigkeit aus. Aufgrund der geringen Reibungskraft beim Einnehmen des Dichtkontakts kann auf kostengünstigere und/oder leistungsärmere Stellantriebe zum Betätigen des Stellglieds zurückgegriffen werden.

In einer beispielhaften nicht beanspruchten Ausführung eines Wegeventils ist die Schienenführung durch eine formkorrespondierende Vorsprung-Vertiefung-Struktur an Stellteil und Dichtteil realisiert. Die Vorsprung-Vertiefung-Struktur kann Eingriffselemente an Stellteil und Dichtteil aufweisen, die einander derart zugeordnet und/oder aufeinander derart formabgestimmt sind, dass sie ineinander eingreifen können, um die Relativbeweglichkeit des Dichtteils bezüglich des Stellteils zu etablieren.

In einer weiteren beispielhaften Ausführung der vorliegenden Erfindung kann das Ventilglied einen Dichtkontakt-Schaltzustand, in dem sich das Dichtteil im Dichtkontakt mit dem Ventilgehäuse befindet, und einen bezüglich des Dichtkontakt-Schaltzustands zurückversetzten Freigabe-Schaltzustand einnehmen, in dem das Dichtteil von dem Ventilgehäuse wegbewegt ist. Beispielsweise ist das Dichtteil zum Einnehmen des Dichtkontakt-Schaltzustands in Richtung des Ventilgehäuses gedrängt. Die Schienenführung kann beispielsweise eine Art Getriebe bilden. Beim Einnehmen des Dichtkontakt-Schaltzustands kann demnach das Dichtteil beispielsweise nach radial außen bezüglich der Drehstellachse oder quer zur Translationsstellachse gedrängt werden, sodass ein zwischen Dichtteil und Ventilgehäuse bestehender Abstand überbrückt werden kann, sodass das Dichtteil in einen Anpress-Dichtkontakt mit dem Ventilgehäuse geraten kann. Beim sich Entfernen aus dem Dichtkontakt-Schaltzustand in den zurückversetzten Freigabe-Schaltzustand kann das Dichtteil über die Schienenführung wieder weg von dem Ventilgehäuse bewegt werden, sodass ein diesbezüglicher Abstand hergestellt und eine Reibung zwischen Dichtteil und Ventilgehäuse verringert, insbesondere unterbunden, wird.

Gemäß einer beispielhaften nicht beanspruchten Ausführung eines Wegeventils ist das Dichtteil derart beweglich an dem Stellteil gelagert, dass das Dichtteil beim Verlassen des Dichtkontakts vorzugsweise ausschließlich unter dem Einfluss des Fluiddrucks von dem Ventilgehäuse wegbewegt wird. Des Weiteren ist es möglich, dass das Dichtteil beim Verlassen des Dichtkontakts über eine Führungseinrichtung von dem Ventilgehäuse wegbewegt wird. Sobald das Dichtteil aus dem Dichtkontakt wegbewegt wird, um einen Schaltzustand des Wegeventils einzustellen, bei dem eine Fluidströmung durch das Wegeventil hindurch, insbesondere durch eine dem entsprechenden Dichtkontakt zugeordnete Fluidöffnung hindurch, zugelassen ist, baut sich ein Fluiddruck an dem Dichtteil auf, welches in Folge dessen durch diesen verlagert wird. Die Ausnutzung des Fluiddrucks hat unter anderem den Vorteil, dass der ohnehin vorhandene Fluiddruck genutzt werden kann, um den Freigabe-Schaltzustand einzustellen, insbesondere ohne dass weitere Komponenten, wie eine Federvorspannung, ein eigenes Getriebe oder ein eigenes Bewegungsmittel für das Dichtteil, notwendig ist.

In einer weiteren beispielhaften nicht beanspruchten Ausführung eines Wegeventils ist die Bewegungsachse bzw. -richtung des Dichtteils im Wesentlichen senkrecht zur Stellachse, insbesondere zur Drehstellachse oder zur Translationsstellachse, des Ventilglieds orientiert. Die Schienenführung kann dabei als Art Getriebe zum Umsetzen der verschiedenen Bewegungsrichtungen zwischen Stellteil und Dichtteil dienen.

In einer weiteren beispielhaften nicht beanspruchten Ausführung eines Wegeventils weist die Vorsprung-Vertiefung-Struktur eine dichtteil- oder stellteilseitige geradlinige Führungsschiene und einen dazu formkomplementären stellteil- oder dichtteilseitigen Führungswagen auf. Die Führungsschiene und/oder der Führungswagen können/kann jeweils aus einem Stück mit dem Dichtteil beziehungsweise dem Stellteil hergestellt sein. Die formkomplementäre Schiene-Wagen-Struktur ist zum einen auf einfache Weise herstellbar und zum anderen bietet sie eine gezielte Montage von Dichtteil und Stellteil und stellt ferner eine unmittelbare Führung bei der Relativbewegung von Stellteil bezüglich Dichtteil bereit.

Gemäß einer weiteren beispielhaften nicht beanspruchten Ausführung eines Wegeventils weist die Führungsschiene einen asymmetrischen, insbesondere im Wesentlichen kreuzförmigen, Querschnitt auf. Durch die Asymmetrie ist eine Fehlmontage vermieden. Beispielsweise kann das Stellteil eine kreuzförmige, sich quer zur Drehstellachse beziehungsweise Translationsstellachse orientierte Führungsschiene aufweisen, auf welche der stellteilseitige Führungswagen, welcher beispielsweise als formkomplementäre, kreuzförmige Vertiefung ausgebildet ist, mittels welcher das Stellteil auf die Führungsschiene aufgeschoben beziehungsweise aufgesetzt wird.

Gemäß einer weiteren beispielhaften nicht beanspruchten Ausführung eines Wegeventils sind die Kulissenführung und die Schienenführung miteinander gekoppelt, insbesondere aufeinander abgestimmt. Kulissenführung und Schienenführung können so aufeinander abgestimmt sein, dass zum Einnehmen des Dichtkontakt-Schaltzustands sowie beim Einnehmen des bezüglich des Dichtkontakt-Schaltzustands zurückversetzten Freigabe-Schaltzustands die Schienenführung auf die Kulissenführung reagiert. Das Wegeventil kann derart ausgebildet sein bzw. die Kulissenführung und die Schienenführung können so aufeinander abgestimmt und/oder gekoppelt sein, dass die Kulissenführung die Schienenführung aktiviert.

Gemäß einer beispielhaften nicht beanspruchten Ausführung eines Wegeventils ist die Kulissenführung dazu eingerichtet, zum Einnehmen des Dichtkontakt-Schaltzustands die Schienenführung zu aktivieren. Dies kann dadurch realisiert sein, dass die Kulissenführung veranlasst, dass das Dichtteil relativ zu dem Stellteil verlagert wird und in einen Dichtkontakt mit dem Ventilgehäuse gedrängt wird. Das Einnehmen des Dichtkontakt-Schaltzustands kann beispielsweise derart erfolgen, dass das Dichtteil relativ zu dem Stellteil verlagert und in Richtung des Ventilglieds zum Aufbau eines Dichtkontakt-Anpressdrucks gedrängt wird sowie in entgegengesetzter Richtung zum Verlassen des Dichtkontakt-Schaltzustands und Einnehmen des Freigabe-Schaltzustands.

Gemäß einer weiteren nicht beanspruchten Ausführung eines erfindungsgemäßen Wegeventils führt das Dichtteil beim Stellen des Ventilglieds eine Exzenterbewegung entlang des Kulissenpfads aus. Beispielsweise führt das Dichtteil derart eine Exzenterbewegung aus, dass das Dichtteil insbesondere von einer Weiche oder einer Andrücknase in den Dichtkontakt-Schaltzustand gedrängt und vorzugsweise ausschließlich unter dem Einfluss des Fluiddrucks aus dem Dichtkontakt zurückversetzt wird. Beispielsweise weist das Dichtteil den zuvor beschriebenen, als Kulissenstein fungierenden und mit der Führungsnut in dem Ventilgehäuse zusammenwirkenden Führungsvorsprung auf. Je nach Rotations- bzw. Drehstellung des Drehkolben-Ventilglieds beziehungsweise je nach axialer Position entlang der Translationsstellachse und in Abhängigkeit davon, ob der Führungsvorsprung des Dichtteils sich im Bereich einer Weiche oder einer Andrücknase befindet oder nicht, wird das Dichtteil in einen Dichtkontakt-Anpresszustand mit dem Ventilgehäuse gedrängt oder davon zurückversetzt. Die Schienenführung und die Kulissenführung können so aufeinander abgestimmt sein, dass das Dichtteil jeweils im Bereich der Fluidöffnungen, die es zu verschließen gilt, um beispielsweise eine Fluidströmung abzusperren oder zu verringern, in einen Dichtkontakt mit dem Ventilgehäuse gebracht wird.

Gemäß einer weiteren beispielhaften Ausführung ist das Ventilglied zwischen einem Schließzustand, in dem das Ventilglied in einen Dichtkontakt mit dem Ventilgehäuse gedrängt ist und in dem die Dichtung aktiv ist, um eine der Fluidöffnungen fluiddicht zu verschließen, und einem Öffnungszustand, in dem das Ventilglied von dem Ventilgehäuse weg zurückversetzt ist und in dem die Dichtung inaktiv ist, um die Fluidöffnung wenigstens teilweise zu öffnen, stellbar.

In einer beispielhaften Ausführung, die auf alle der zuvor beschriebenen Aspekte beziehungsweise beispielhaften Ausführungen erfindungsgemäßer Wegeventile beziehungsweise KFZ-Wegeventile anwendbar ist, ist das Ventilglied frei von einem Fluiddurchgang ausgestaltet. Das Ventilglied kann mit anderen Worten derart ausgeführt sein, dass beim Zulassen einer Fluidströmung durch das Wegeventil hindurch, also bei einem Öffnungszustand des Wegeventils, die Fluidströmung an dem Ventilglied vorbeiströmt. Beispielsweise weist das Ventilglied eine wenigstens abschnittsweise rotationsförmige Außenkontur auf, sodass sich ein möglichst geringer Staudruck ausbildet und/oder die Fluidströmung möglichst reibungsfrei an dem Ventilglied vorbei strömen kann.

Gemäß einem weiteren Aspekt der vorliegenden Erfindung, der mit den vorhergehenden Aspekten und beispielhaften Ausführungen kombinierbar ist, ist ein KFZ-Fluidströmungsleitsystem, insbesondere ein KFZ-Thermomanagement-Fluidleitsystem, wie ein KFZ-Kühlkreislauf, bereitgestellt. Das KFZ-Fluidströmungsleitsystem umfasst ein erfindungsgemäßes beispielsweise gemäß einem der zuvor beschriebenen Aspekte beziehungsweise beispielhaften Ausführungen ausgebildetes Wegeventil. Ferner kann das Fluidströmungsleitsystem an eine Fluidquelle, wie beispielsweise ein Kühlmittelreservoir, und/oder eine zu kühlende Kraftfahrzeugkomponente, wie eine Motorkomponente oder eine KFZ-Batterie, angeschlossen sein.

Bevorzugte Ausführungen sind in den Unteransprüchen gegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine perspektivische Schnittansicht einer beispielshaften Ausführung eines erfindungsgemäßen Wegeventils;
- Figur 2: eine Seitansicht zur Darstellung einer weiteren beispielshaften Ausführung eines erfindungsgemäßen Wegeventils;
- Figur 3: eine weitere Schnittansicht des Wegeventils der Figuren 1 und 2;
- Figur 4: eine perspektivische Schnittansicht einer weiteren beispielshaften Ausführung eines erfindungsgemäßen Wegeventils;
- Figur 5: eine perspektivische Schnittansicht einer weiteren beispielshaften Ausführung eines erfindungsgemäßen Wegeventils;
- Figur 6: eine perspektivische Ansicht eines Ventilgehäuses des Wegeventils aus Fig. 5;
- Figur 7a, 7b: verschiedene perspektivische Ansichten eines Ventilglieds eines erfindungsgemäßen Wegeventils;
- Figur 8: eine Schnittansicht des Ventilglieds aus Figur 7a, 7b;
- Figur 9: eine perspektivische Ansicht eines Vormontagezustands einer weiteren beispielhaften Ausführung eines Ventilglieds eines erfindungsgemäßen Wegeventils;
- Figur 10: eine perspektivische Ansicht eines Montagezustands des Ventilglieds aus Figur 9;
- Figur 11: eine perspektivische Schnittansicht einer weiteren beispielhaften Ausführung eines erfindungsgemäßen Wegeventils mit dem Ventilglied aus den Figuren 9, 10; und
- Figur 12: eine perspektivische Schnittansicht einer weiteren beispielhaften Ausführung eines erfindungsgemäßen Wegeventils.

In der folgenden Beschreibung beispielhafter Ausführungen anhand der beiliegenden Figuren, ist ein erfindungsgemäßen Wegeventil, welches insbesondere ein KFZ-Wegeventil zum Einstellen einer Fluidströmung, wie einer Kühlmittelströmung in einem Kraftfahrzeug, insbesondere einem Kraftfahrzeugmotor, ist, ist im Allgemeinen mit der Bezugsziffer 1 versehen.

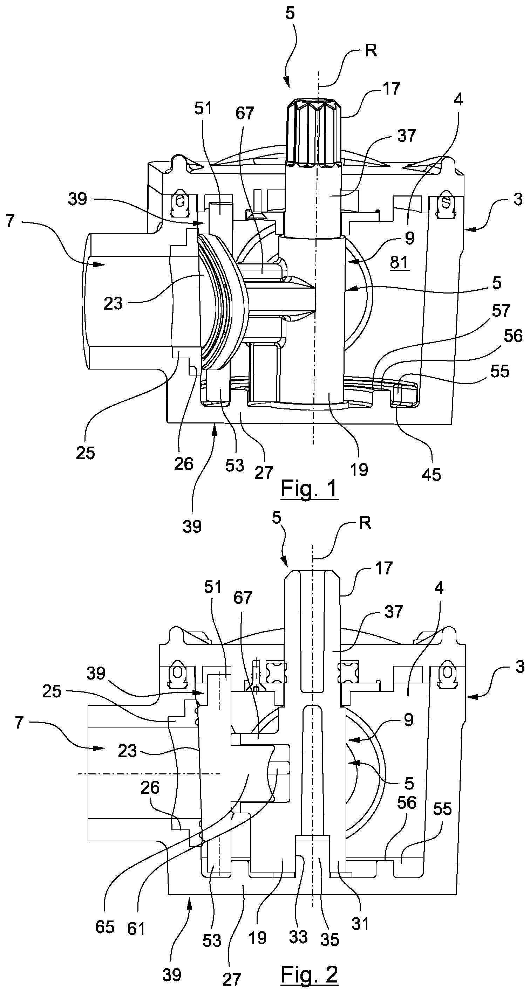

Das Wegeventil 1 gemäß Figur 1 umfasst im Wesentlichen die folgenden Hauptkomponenten: ein Ventilgehäuse, durch das eine Fluidströmung hindurch strömbar ist; und ein stellbares Ventilglied 5, welches gemäß der beispielshaften Ausführung als Drehkolben realisiert ist, welcher zum Einstellen verschiedener Schaltzustände des Wegeventils 1 bezüglich einer Drehstellachse R drehbar ist.

Das Ventilgehäuse 3 umfasst mehrere Fluidanschlüsse oder Fluidöffnungen 7, 9, 11, von denen wenigstens ein Fluideingang und ein Fluidausgang vorliegen. In Figur 1 ist zu erkennen, dass das Ventilgehäuse 3 nach oben hin offen ausgestaltet und mittels eines Ventildeckels 13 insbesondere fluiddicht abgeschlossen ist. Der Fluiddeckel 13 weist eine mittige Durchgangsöffnung 15 auf, durch die hindurch sich das Ventilglied 15 fluiddicht erstreckt und in welcher es drehbar gelagert ist, sodass das Ventilglied 5 kraftübertragungsgemäß an einen nicht dargestellten Stellantrieb gekoppelt werden kann. Der Stellantrieb dient dazu, die notwendige Stellantriebskraft zum Betätigen des Ventilglieds 5 aufzubringen, welche notwendig ist, um die verschiedenen Schaltzustände des Wegeventils 1 einzustellen. An einem von dem Ventildeckel 13 vorstehenden Ende des Ventilglieds 5 kann dieses ein dem Stellantrieb zugeordnetes Kraftübertragungsteil 17 formen.

In der beispielhaften Ausführung gemäß Figur 1 besteht das Ventilglied 5 aus einem kraftübertragungsgemäß mit einem Stellantrieb zu koppelnden Stellteil 19, welches das Kraftübertragungsteil 17 aufweist, und einem relativ zu dem Stellteil 19 bewegbaren Dichtteil 21, das dazu ausgelegt ist, einen Dichtkontakt-Schaltzustand einnehmen zu können, in dem das Dichtteil 21 eine der Fluidöffnungen 7, 9, 11 fluiddicht verschließt, sowie auch einen Freigabe-Schaltzustand einnehmen zu können, in dem das Dichtteil 21 die Fluidöffnungen 7, 9, 11 öffnet, sodass eine Fluidströmung durch die jeweiligen Öffnungen 7, 9, 11 zugelassen ist.

Das Ventilgehäuse 3, welches rotationsförmig ist und im Wesentlichen eine Becherform aufweist, besitzt einen geschlossenen Ventilgehäuseboden 27. In dem Ventilgehäuseboden 27 ist eine mittige Drehlagerung 29 für das Ventilglied 5, insbesondere dessen Stellteil 19 vorgesehen.

Das Einnehmen des Dichtkontakt-Schaltzustands zum fluiddichten Verschließen der Fluidöffnungen 7, 9, 11 sowie auch das Freigeben der einzelnen Fluidöffnungen 7, 9, 11, also das Einnehmen des Freigabe-Schaltzustands, wird über eine Kopplung und Aufeinanderabstimmung einer Kulissenführung 39 und einer Schienenführung 41 erreicht. Die Kulissenführung 39 dient dazu, das Ventilglied 5, insbesondere das Dichtteil 21, in den Dichtkontakt-Schaltzustand mit dem Ventilgehäuse 5 zu drängen und das Ventilglied 5, insbesondere das Dichtteil 21, aus dem Dichtkontakt-Schaltzustand heraus in einen zurückversetzten Freigabe-Schaltzustand zu führen.

Die Schienenführung 41 wirkt dabei als eine Art Getriebe zur Umwandlung einer von der Kulissenführung aufgedrängten Bewegungsänderung in eine Verlagerung des Dichtteils 21. Die Kulissenführung 39 weist einen in dem Ventilgehäuse 3, nämlich dem Ventilgehäuseboden 27, ausgebildeten und aus einem Stück mit dem Ventilgehäuse 5 hergestellten Kulissenpfad 43 auf, in welchem das Ventilglied 5, insbesondere das Dichtteil 21, geführt ist. Der Kulissenpfad 43 ist durch eine in das Ventilgehäuse 3 eingebrachte Führungsnut 45 gebildet, die in Umfangsrichtung in Bezug auf die Drehstellachse R orientiert ist. Die Führungsnut 45 bildet einen geschlossenen Ring in Umfangsrichtung, sodass das darin geführte Dichtteil 21 360° stufenlos verstellt werden kann. Die Führung und Lagerung des Dichtteils 21 innerhalb der Führungsnut 45 erfolgt mittels eines an einer in Richtung der Drehstellachse R orientierten Oberseite 47 sowie der gegenüberliegenden Unterseite 49 des Dichtteils 21 vorgesehenen Führungsvorsprung 51, 53. Es ist auch denkbar, dass das Dichtteil 21 nur einen einzigen Führungsvorsprung 51, 53 aufweist. Der Führungsvorsprung 51, 53 ragt in Richtung der Drehstellachse R in die Führungsnut 45 hinein und gleitet bei einer Drehstellbewegung des Ventilglieds 5 in Radialrichtung entlang der Führungsnut 45. Dabei wirkt der Führungsvorsprung 51, 53 als Kulissenstein und kooperiert mit der Führungsnut 45 zum Lagern und Führen des Ventilglieds 5. Gemäß der vorliegenden Erfindung ist auf konstruktiv einfache Weise ein Wegeventil mit deutlich verminderter Reibung zwischen Ventilglied 5 und Ventilgehäuse 3 bereitgestellt, sodass der Verschleiß an den Komponenten deutlich reduziert ist und auf kostengünstigere Stellantriebe zurückgegriffen werden kann, wobei gleichzeitig eine ausreichende Dichtigkeit im Dichtkontakt-Schaltzustand gewährleistet ist. Die Vorteile werden unter anderem dadurch erreicht, dass ein insbesondere radialer Anpressdruck zum Abdichten der Fluidöffnungen 7, 9, 11 nur dann aufgebracht wird, wenn er notwendig ist, also wenn das Wegeventil 1 so geschaltet ist, dass eine Fluidöffnung 7, 9, 11 verschlossen werden soll.

Figur 2 zeigt eine Seitenansicht einer weiteren beispielhaften Ausführung eines Wegeventils 1. Aus Figur 2 geht die die Drehlagerung 29 hervor, welche eine von einer insbesondere umlaufenden Wandung 31 begrenzte Lagervertiefung 33, in welche sich ein Lagerungszapfen 35 des Ventilgehäuses erstreckt. Der Lagerungszapfen 35 ist drehbar innerhalb der Lagerungsvertiefung 33 aufgenommen. Ferner ist der Lagerungszapfen 35 im Wesentlichen konzentrisch bezüglich einer sich entlang der Drehstellachse R ersteckenden Welle 37 des Stellteils 19 orientiert.

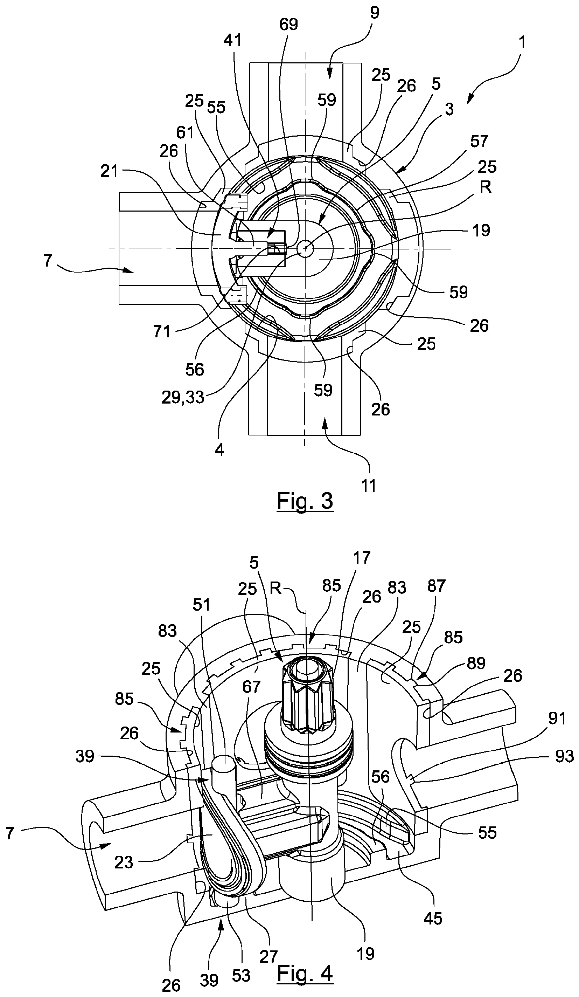

Das Ventilgehäuse 3 umfasst eine der Fluidöffnung 7 zugeordnete Dichtungsaufnahme 26 auf, in der eine ringförmige, aus einem Stück hergestellte Dichtung 25 angeordnet ist. Die Dichtung 25 meist im Querschnitt eine L-Form auf und ist vom Ventilinnenraum 81 her in die Dichtungsaufnahme 26 mittels eines Spritzgussverfahrens eingespritzt. Die Dichtungsaufnahme 26 und die Dichtung 25 sind konzentrisch bezüglich der Fluidöffnung 7 angeordnet und begrenzen diese umfänglich. Im Schließzustand, wie es auch in Figur 2 ersichtlich ist, ist die Dichtung 25 aktiv und das Dichtteil 21 bildet mit der Dichtung 25 einen Dichtkontakt aus. Wie insbesondere aus der folgenden Figur 3 ersichtlich ist, ist die Dichtung 25 an die Innenkontur der Ventilgehäusewand formangepasst, sodass in Umfangsrichtung und auch in Richtung der Drehstellachse R die Dichtung 25 kontinuierlichen vorsprungsfrei in die Wandungskontur übergeht, insbesondere sodass die Dichtung 25 die Stellbewegung des Ventilglieds 5 nicht beeinträchtigt.

In Figur 3 ist eine Draufsicht auf ein Ventilgehäuse 3 mit montiertem Ventilglied 5 abgebildet, aus der die Kulissenführung 39 und die Schienenführung 41 ersichtlich sind. Die den Kulissenpfad 43 definierende Führungsnut verläuft gemäß Figur 3 in Umfangsrichtung und konzentrisch bezüglich der Drehstellachse R und ist durch zwei in Radialrichtung zueinander beabstandete Nutwände 55, 57 begrenzt. Die radial innere Nutwand 55 ist Teil eines Umfangsstegs 56 oder -vorsprungs, welcher die Führungsnut 45 bildet bzw. begrenzt. Der Führungsvorsprung 53, 51 kann bezüglich eines insbesondere radialen Querschnitts der Führungsnut 45 formabgestimmt sein, sodass beim Stellen des Ventilglieds 5, wenn der Führungsvorsprung 51, 53 entlang des Kulissenpfads 43 entlang fährt, der Führungsvorsprung 53, 51 mit den Nutwänden 55, 57 sich in einem Gleitkontakt befinden kann. Die Führungsnut 45 ist so eingestellt, beziehungsweise das Dichtteil 21 und die Führungsnut 45 sind so aufeinander abgestimmt, dass beim Verstellen des Ventilglieds 5 im Bereich zwischen je zwei benachbarten Fluidöffnungen 7, 9, 10, 11 kein radialer Anpressdruck und damit ein radialer Reibungswiderstand zwischen Dichtteil 21 und Ventilgehäuse 3 besteht. Mit anderen Worten ist die Führungsnut 45 so dimensioniert, dass das Dichtteil 21 in Bezug auf einen Dichtkontakt-Schaltzustand, in dem das Dichtteil mit dem Ventilgehäuse 3 in einen fluiddichten Dichtkontakt geraten kann, nach radial innen zurückversetzt ist, sodass kein Reibungskontakt zwischen Dichtteil 21 und Ventilgehäuse 3 besteht. Somit besteht ein radialer Abstand zwischen Dichtteil 21 und Ventilgehäuseinnenwand 4.

Zur Sicherstellung eines ausreichenden Dichtkontakts zum fluiddichten Verschließen der Fluidöffnungen 7, 9, 10, 11 weist die Führungsnut in der beispielshaften Ausführung gemäß Figur 3 vier in Umfangsrichtung bezüglich der Drehstellachse R verteilte Weichen oder Andrücknasen 59 auf. Die Andrücknasen 59 sind an der radial inneren Nutwand 57 angeordnet und erstrecken sich nach radial außen in Bezug auf die Drehstellachse R. Je eine Andrücknase 59 ist außerdem je einer Fluidöffnung, 7, 9, 10, 11 zugeordnet und konzentrisch bezüglich einer Mittelachse durch die jeweilige Fluidöffnung 7, 9, 10, 11 orientiert, sodass zum Einnehmen des Dichtkontakt-Schaltzustand im Verlauf einer Drehstellbewegung des Ventilglieds 5 um die Drehstellachse R das Dichtteil 21 von den Andrücknasen 59 nach radial außen in Richtung des Ventilgehäuses 3 gedrängt wird, um einen radialen Anpressdruck zum fluiddichten Verschließen der jeweiligen Fluidöffnungen 7, 9, 10, 11 aufzubauen. Die An-drücknasen 59 bewirken demnach, dass das Dichtteil 21 quer, insbesondere radial, zur Drehstellachse um- beziehungsweise ausgelenkt wird. Die Relativbewegungsoption des Dichtteils 21 relativ zu dem Stellteil 19 wird, wie bereits beschrieben, mittels der Schienenführung 41 realisiert.

Erneut bezugnehmend auf Figur 2 ist zu erkennen, dass die Schienenführung 41 auf eine Vorsprung-Vertiefung-Struktur an Stellteil 19 und Dichtteil 21 realisiert ist, welche gemäß Figur 1 eine stellteilseitige, geradlinige Führungsschiene 61 aufweist, die gemäß Figur 1 durch ein paar sich parallel erstreckende Führungsschienenelementen gebildet ist, und einen dazu formkomplementären dichtteilseitigen Führungswagen 71 umfasst. Gemäß Figur 1 ist der Führungswagen 71 durch eine bezüglich der Führungsschiene 61 formangepasste Vertiefung an einer Innenseite eines dem Stellteil 19 zugewandten und zugeordneten Führungsteils 65 angeordnet, welches bezüglich eines stellteilseitigen, dem Dichtteil 21 zugewandten und zugeordneten Führungsteils 67 formangepasst und auf dieses aufgeschoben beziehungsweise aufgesteckt ist. Dadurch, dass die Andrücknasen 59 den Fluidöffnungen 7, 9, 10, 11 zugeordnet und zugewandt sind, wird das Stellteil 19 von den Andrücknasen 59 und mittels der Führungsschienen-Führungswagen-Struktur an Stellteil 19 und Dichtteil 21 zum Einnehmen des Dichtkontakt-Schaltzustands nach radial außen gedrängt, um einen radialen Anpressdruck aufzubauen.

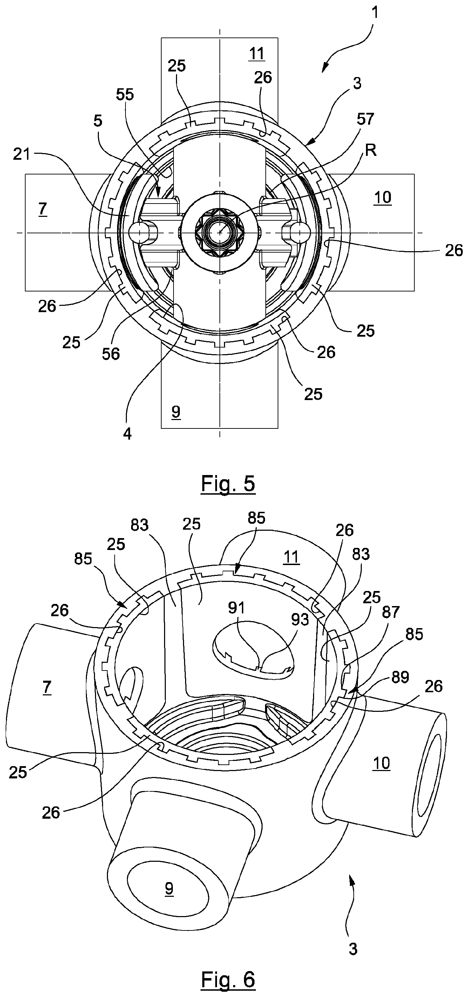

In dem Dichtkontakt-Schaltzustand gemäß Figur 3 ist das Dichtteil 21 in Bezug auf das Stellteil 19 durch die Kulissenführung 39 und mittels der Schienenführung 41 nach radial außen in einen Dichtkontakt mit der Ventilgehäuseinnenwandung 4 gedrängt, um einen radialen Anpressdruck bezüglich der Ventilgehäuseinnenwandung 4 aufzubauen, damit die Fluidöffnung 7 möglichst fluiddicht verschlossen ist. Wie bereits erwähnt erfolgt das radial nach außen Drängen des Dichtteils 21 gegenüber dem Stellteil 19 durch die Kooperation aus Kulissenführung 39 und Schienenführung 41. Der innerhalb der Führungsnut 45 geführte und darin aufgenommene Führungsvorsprung 53 des Dichtteils 21 ist formschlüssig mittels der Andrücknase 59, welche der Fluidöffnung 7 zugeordnet ist, nach radial außen umgelenkt, wodurch über die Schienenführung 41 die entsprechenden Führungsschienen und Führungswägen an Dichtteil und Schließteil aneinander entlang gleiten, um das gesamte Dichtteil 21 nach radial außen zu bewegen. Der vergrößerte Radialabstand zwischen Dichtteil 21 und der Drehstellachse R ist beispielsweise durch den radialen Abstand des dichteilseitigen Führungsschiene 61 gegenüber dem Stellteil 19 innerhalb der Vertiefung 69, welche den Führungswagen 71 bildet im Vergleich zur Ausführung gemäß Figur 5 zu erkennen, bei der das Ventilglied im Schwenkbereich zwischen zwei Dichtkontakt-Schließzuständen abgebildet ist.

Das Ventilgehäuse 3 aus Figur 4 unterscheidet sich von den vorhergehenden Ausführungen im Hinblick auf die Ausgestaltung der Dichtungsaufnahme 26 sowie der Dichtung 25. Wie in Figur 4 zu erkennen ist, umfasst das Wegeventil 1 insgesamt 4 Dichtungen 25 (davon sind 3 abgebildet), die in Umfangsrichtung in Bezug die Drehstellachse R in einem konstanten Abstand zueinander angeordnet sind. Die Dichtungen 25 gemäß Figur 4 kleiden die Ventilgehäuseinnenwand innenseitig jeweils großflächig aus, sodass bis auf sich in Richtung der Drehstellachse R erstreckende Wandabschnitte 83 die Ventilgehäuseinnenwand im Wesentlichen vollständig von den Dichtungen ausgekleidet bzw. bedeckt ist. Es sei klar und ist auch so in Figur 4 abgebildet, dass die Dichtungsaufnahmen 26 entsprechend geformt sind. Zur Positionssicherung der Dichtungen 25 in den Dichtungsaufnahmen 26 bilden die Dichtungen 25 jeweils mit einer Dichtungsaufnahme 26 einen Formschlusseingriff, hier in Form einer Feder-Nut-Verbindung 85, aus. Die Feder-Nut-Verbindungen 85 sind durch mehrere in Umfangsrichtung verteilte Vorsprung-Vertiefung-Paare 87, 89 gebildet. Dadurch, dass die Dichtungen 25 jeweils im Wesentlichen vollständig innerhalb der Dichtungsaufnahmen 26 aufgenommen und darin untergebracht sind, ist ein kontinuierlicher, vorsprungfreier Übergang zwischen den Wandabschnitten 83 und den Dichtungen 25 gebildet, der ein zuverlässiges Stellen des Ventilglieds 5 sicherstellt. Mit anderen Worten sind sowohl die Dichtungsaufnahmen 26 als auch die Dichtungen 25 in Bezug auf deren Innenkontur und/oder Wölbung an die Innenkonturen/oder Wölbung der Wandabschnitte 83 angepasst. Auch unmittelbar angrenzend an die Fluidöffnungen 7, 9, 10, 11 können Feder-Nut-Verbindungen 85 zur verstärkten Positionssicherung zwischen Dichtung 25 und Dichtungsaufnahme 26 vorgesehen sein. Mittels des Vorsprung-Vertiefung-Paares 91, 93 ist sowohl eine Relativrotation als auch eine Relativtranslation von Dichtung 25 und Dichtungsaufnahme 26 verhindert.

In den Figuren 5 und 6 ist eine weitere beispielhafte Ausführung eines Ventilgehäuses 3 sowie eines Ventilglieds 5 gezeigt. Im Unterschied zu den vorhergehenden Ausführungen weist das Ventilglied 5 zwei in Radialrichtung bezüglich der Drehstellachse R gegenüberliegende, insbesondere identisch geformte, Dichtteile 21 auf, welche über eine entsprechende Schienenführung 39 miteinander gekoppelt sind, um jeweils eine Relativbewegungsmöglichkeit der beiden Dichtteile 21 gegenüber dem einzelnen, mittigen Stellteil 19 zu realisieren. Das Ventilglied 5 gemäß Figur 5 ist insbesondere für ein 4/2-Wegenventil geeignet, wobei mittels des Ventilglieds 5 gleichzeitig zwei gegenüberliegende Fluidöffnungen 7, 9, 10, 11 verschließbar sind. Durch das derart gestaltete Ventilglied 5 werden jeweils zwei gegenüberliegende Fluidöffnungen 7, 9, 10, 11 verschlossen und die zwei weiteren gegenüberliegenden Fluidöffnungen 7, 9 ,11 ,10 frei gegeben. Mit anderen Worten erfolgt die zugelassene Fluidströmung durch das Ventilgehäuse 3 geradlinig über zwei insbesondere fluchtend zueinander gegenüberliegende Fluidöffnungen 7, 9, 10, 11.

Zur insbesondere strömungsverlustfreien Führung der Fluidströmung durch das Ventilgehäuse 3 und vor allem durch das Ventilglied 5 umfasst das Ventilglied 5 gemäß der Figur 5 einen zentralen Fluiddurchgang 79, der die beiden freizugebenden Fluidöffnungen 7, 9, 10, 11 fluidal miteinander verbindet. Ein Öffnungsquerschnitt des Fluiddurchgangs 79 kann bezüglich eines Öffnungsquerschnitts der Fluidöffnungen 7, 9, 10, 11 des Fluidgehäuses 3 formangepasst sein. Der Fluiddurchgang 79 ist quer, insbesondere senkrecht, zum einen bezüglich der Drehstellachse R und zum anderen bezüglich der Relativbewegungsrichtung der beiden Stellteile 21 bezüglich des Stellteils 19 orientiert. In Figur 5 ist zu erkennen, dass beim Verschwenken beziehungsweise Stellen des Ventilglieds 5 jeweils ein Führungsvorsprung 53 der beiden Dichtteile 21 innerhalb der des Kulissenpfads 43 definierenden Führungsnut 45 im Ventilgehäuse 3 aufgenommen sind und beim Stellen des Ventilglieds 5 innerhalb der Führungsnut 45 entlang gleiten. Durch die auch in dieser Ausführung vorliegende aufeinander Abstimmung von Kulissenführung 39 und Schienenführung 41 werden die beiden Dichtteile 21 gleichzeitig durch jeweils eine Andrücknase 59, die jeweils eine der beiden gegenüberliegenden, zu verschließenden Fluidöffnungen 7, 9, 10, 11 zugeordnet sind, nach radial außen in den Dichtkontakt-Schaltzustand mit der jeweiligen Fluidöffnung 7, 9, 10, 11 gedrängt. Das Verlassen des Dichtkontakt-Schaltzustands erfolgt ebenfalls bei beiden Dichtteilen 21 analog und gleichzeitig.

In den Figuren 5 und 6 ist die Ventilgehäuse-Ausführung 3 aus Figur 4 einmal in der Draufsicht und einmal in vollständige perspektivische Ansicht abgebildet, aus denen vor allem die großflächige Auskleidung der Ventilgehäuseinnenwand ersichtlich ist.

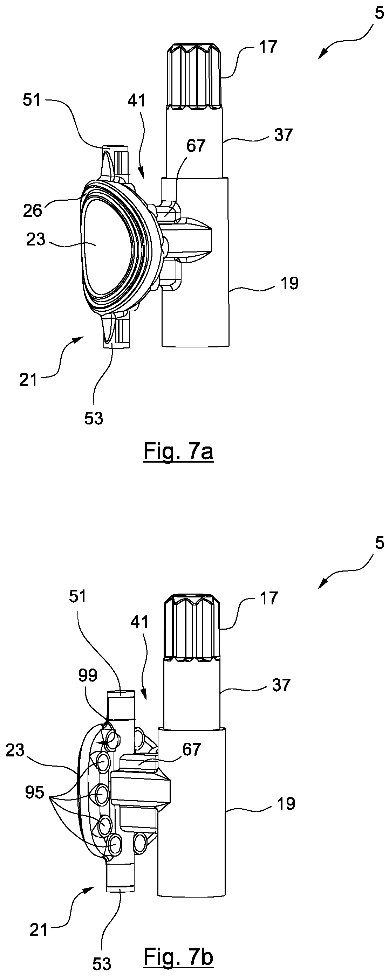

Die Figuren 7a bis 10 verdeutlichen weitere Aspekte der vorliegenden Erfindung anhand der Beschreibung einer beispielhaften Ausführung eines Ventilglieds 3 für ein Wegeventil 1. Das Dichtteil 21 und das Stellteil 19 sind in einem montierten Zustand miteinander dargestellt. Das Dichtteil 21 weist an einer in Bezug auf die Drehstellachse R radial nach außen orientierten Stirnseite 23, die als Dichtseite dient, eine Dichtungsaufnahme 26 auf, um ein verbessertes fluiddichtes Verschließen der Fluidöffnungen 7, 9, 10, 11 zu erreichen (Figur 7a). Die Dichtungsaufnahme 26 ist ringförmig, insbesondere ringnutförmig, ausgebildet und befindet sich randnah, d.h. radial außen an der Stirnseite 23.

Bezugnehmend auf die Figuren 7b bis 10 wird das widerhakenartige Hintergreifen von Dichtung 25 und Dichtungsaufnahme 26 näher erläutert. Die Dichtungsaufnahme 26 umfasst, wie es in Figur 7b ersichtlich ist, mehrere in Umfangsrichtung verteilte Formschlussöffnungen 95 zum Empfangen je eines bezüglich der Formschlussöffnungen 95 formabgestimmten Vorsprungs 97, sodass die Dichtung 25 und die Dichtungsaufnahme 26 zum Verhindern eines sich voneinander Entfernens entgegen der Montagerichtung formschlüssig ineinander eingreifen können. Die Formschlussöffnungen 95 sind als Durchgangsöffnungen ausgebildet und erstrecken sich von der Stirnseite 23 hin zur Rückseite 99. An der Rückseite 99 sind die Formschlussöffnungen 95 in Form von holzylindrischen Hülsen oder Stutzen geformt ausgebildet.

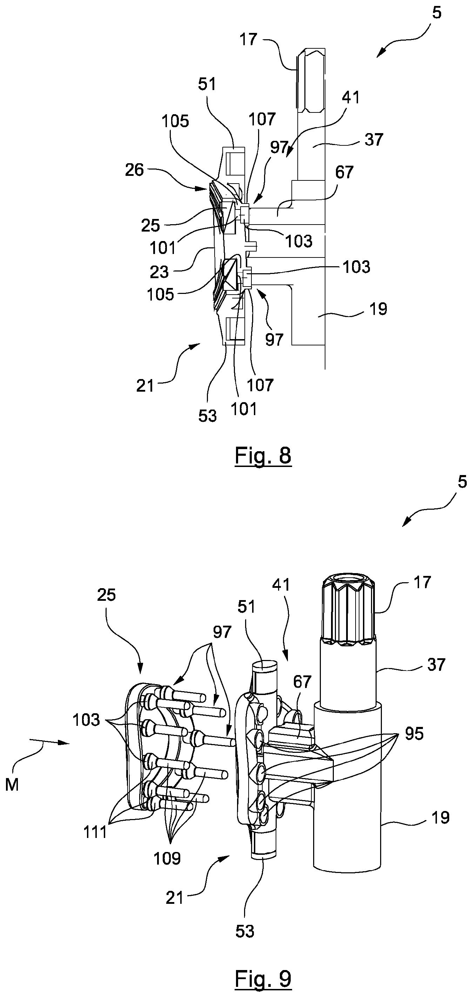

In Figur 8 ist eine Schnittansicht des Ventilglieds 5 mit montierter Dichtung 25 gezeigt. Die Dichtung 25 und die Dichtungsaufnahme 26 sind derart aufeinander formabgestimmt, die sich Dichtung 25 und die Dichtungsaufnahme 26 in Bezug auf die Montagerichtung widerhakenartig hintergreifen. Dies wird gemäß der beispielhaften Ausführung in Figur 8 durch eine die Widerhakenstruktur in Form der rotationsförmigen von der Dichtung vorstehenden Vorsprünge 97 gebildet, die je einen Stegabschnitt 101 insbesondere konstanten Durchmessers und einen gegenüber dem Stegabschnitt 101 quer zur Längserstreckung des Vorsprung 97 vorstehenden, insbesondere umlaufenden, Halteabschnitt 103 aufweisen. Die in dem Ventilglied 5 ausgebildeten Formschlussöffnungen 95 der Dichtungsaufnahme 26 umfassen eine entsprechende Form, nämlich eine dem Stegabschnitt 101 der Dichtung 25 zugeordnete Stegaufnahme 105 und eine dem Halteabschnitt 103 zugeordnete, gegenüber der Stegaufnahme 105 quer zur Längserstreckung der Formschlussöffnung 95 vorstehende, insbesondere umlaufende, Halteaufnahme 107. Die Dichtung 25 kann beispielsweise in Montagerichtung in die Dichtungsaufnahme eingesetzt, insbesondere eingepresst bzw. eingeklipst, werden. Die Montagerichtung ist schematisch in Figur 9 abgebildet, in welcher die Dichtung 25 in Bezug auf das Ventilglied 5 demontiert ist. Wie es insbesondere aus Figur 8 ersichtlich ist, ist die Dichtung 25 gegen ein sich Entfernen aus der Dichtungsaufnahme 26 bzw. von dem Ventilglied 5 weg über das formschlüssige Ineinandereingreifen von Dichtung 25 und Dichtungsaufnahme 26, bzw. Dichtungsvorsprung 97 und Formschlussöffnung 95, gesichert. Durch das widerhakenartige Hintergreifen der Halteabschnitte 103 in den Halteaufnahmen 107 gegenüber den radial zurückversetzten Stegaufnahmen 105 ist eine ungewollte Demontage der Dichtung 25 aus der Dichtungsaufnahme in 26 verhindert. Die Halteabschnitte 103 verhaken sich mit den Aufnahmestegen 105 und bauen eine axiale Haltekraft auf, die eine ungewollte Demontage unterbindet.

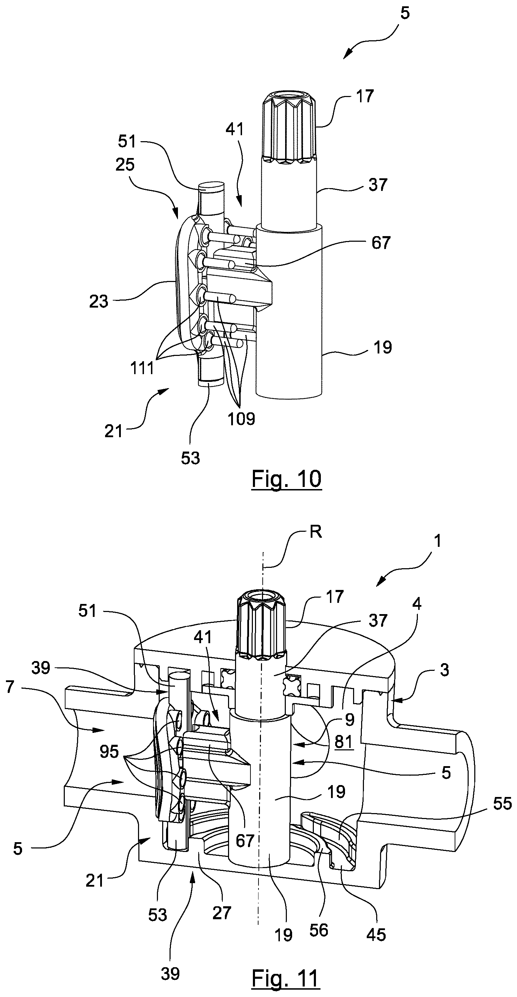

Bezugnehmend auf Figur 9, in der ein Demontagezustand bezüglich Weise eine Explosionsdarstellung aus Figur 8 ersichtlich ist, ist eine beispielhafte Ausführung einer ringförmigen Dichtung 25 mit mehreren in Umfangsrichtung verteilten Dichtungsvorsprüngen 97 gezeigt. Jedem Dichtungsvorsprüngen 97 ist eine Formschlussöffnung 95 in dem Ventilglied 3 zugeordnet, sodass beim axialen einsetzen bzw. Einspritzen der Dichtung 25 in Dichtungsaufnahme 26 die Dichtungsvorsprünge 97 zunehmend in die Formschlussöffnungen 95 hineinragen und an der Rückseite 99 des Ventilglieds 3 herausragen (Figur 10). Die Widerhakenstruktur von Dichtung 25 und Dichtungsaufnahme 26 ermöglicht eine besonders widerstandsfähige haftvermittlerfreie Anbringung der Dichtung 25 an dem Ventilglied 5.

Gemäß einer beispielhaften Ausführung ist die Dichtung 25 aus einem Stück, insbesondere mittels eines Spritzgussverfahrens, hergestellt. Es ist möglich, dass die Dichtung 25 direkt über das Herstellungsverfahren, d. h. das Spritzgussverfahren, in die Dichtungsaufnahme 26 eingespritzt wird. Erneut bezugnehmend auf Figur 9 ist zu sehen, dass die Dichtungsvorsprünge 97 vorlaufende Führungsstege 109 aufweisen können, die vom Durchmesser her den Stegabschnitten 105 entsprechen können. Über die Führungsstege 109 ist ein besonders einfaches und/oder zielgerichtetes Einführen der Dichtung 25 in die Dichtungsaufnahme 26 und die entsprechenden Formschlussöffnungen 95 möglich. Der Übergang zwischen den Führungsstegen 109 und den Halteabschnitten 103 kann über eine kegelförmige Zentrierungskontur 111 gebildet sein, die beim Einsetzen der Dichtung 25 in Montagerichtung M in die Dichtungsaufnahme 26 eine Zentrierung der Dichtungsvorsprünge 97 in den Formschlussöffnungen 95 bewirkt.

Figur 10 zeigt den entsprechenden Montagezustand des Ventilglieds 3 mit der Dichtung 25 gegenüber dem Demontagezustand aus Figur 9. Es ist ersichtlich, dass wenigstens die Führungsstege 109 aus den Formschlussöffnungen 95 vorstehen. Aus einem Vergleich von Figur 10 mit Figur 11, die schließlich den eingebauten Zustand des Ventilglieds 3 mit montierter Dichtung 25 in dem Ventilgehäuse 5 zeigt, ist zu erkennen, dass die Führungsstege 109 abgetrennt worden sind. Die Führungsstege 109 können somit als Wegwerfprodukt ausgebildet sein, die beim Betrieb des Wegeventils 1 keine Funktion besitzen.

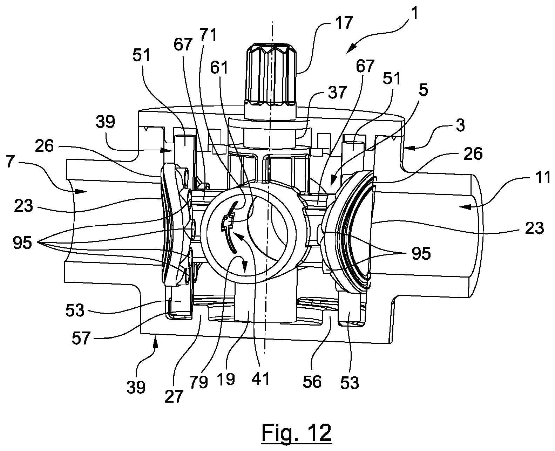

In den Figuren 11 und 12 ist erneut das Zusammenspiel aus Ventilglied 5 und Ventilgehäuse 3 zum dichtenden Verschließen der Fluidöffnungen 7, 9, 10, 11 dargestellt, wobei das Ventilglied 5 entsprechend der Ausführung aus Figur 10 gebildet ist, in Figur 11 als Einzelventilglied 5 und in Figur 12 als Doppelventilglied 5 entsprechend der Ausführung in Figur 5.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein, sofern sie unter den Schutzumfang der Ansprüche fallen.

### BEZUGSZEICHENLISTE

- 1: Wegeventil
- 3: Ventilgehäuse
- 4: Ventilgehäuseinnenwandung
- 5: Ventilglied
- 7, 9, 10, 11: Fluidöffnung
- 13: Deckel
- 15: Durchgangsöffnung
- 17: Kraftübertragungsteil
- 19: Stellteil
- 21: Dichtteil
- 23: Dichtfläche
- 25: Dichtung
- 26: Dichtungsaufnahme
- 27: Ventilgehäuseboden
- 29: Lagerung
- 31: Ringwand
- 33: Vertiefung
- 35: Lagerungsvorsprung
- 37: Welle
- 39: Kulissenführung
- 41: Schienenführung
- 43: Kulissenpfad
- 45: Führungsnut
- 47: Oberseite
- 49: Unterseite
- 51, 53: Führungsvorsprung
- 55, 57: Nutwand
- 56: Umfangssteg
- 59: Andrücknase
- 61: Führungsschiene
- 65: Führungsteil des Dichtteils
- 67: Führungsteil des Stellteils
- 69: Vertiefung
- 71: Führungswagen
- 79: Fluiddurchgang
- 81: Ventilinnenraum
- 83: Wandabschnitt
- 85: Feder-Nut-Verbindung
- 87, 91: Vorsprung
- 89, 93: Vertiefung
- 95: Formschlussöffnung
- 97: Dichtungsvorsprung
- 99: Rückseite
- 101: Halteabschnitt
- 103: Stegabschnitt
- 105: Stegaufnahme
- 107: Halteaufnahmen
- 109: Führungssteg
- 111: Zentrierungskontur
- M: Montagerichtung
- R: Drehstellachse

## Patentansprüche

1. Wegeventil (1) zum Einstellen einer Fluidströmung, wie einer Kühlmittelströmung, umfassend:
- ein Ventilgehäuse (3) mit wenigstens zwei Fluidöffnungen, die mit einem von dem Ventilgehäuse (3) begrenzten Ventilinnenraum (81) fluidal verbunden sind, und wenigstens einer Dichtungsaufnahme;
- ein Ventilglied (5), das zum Schließen und wenigstens teilweise Öffnen der wenigstens zwei Fluidöffnungen (7, 9, 10, 11) stellbar ist; und
- eine in einer Montagerichtung (M) mittels eines Spritzgussverfahrens vom Ventilinnenraum (81) her in die wenigstens eine Dichtungsaufnahme (26) eingespritzte und aus einem Stück hergestellte Dichtung (25), **dadurch gekennzeichnet, dass** die Dichtung (25) und die Dichtungsaufnahme (26) zum Verhindern eines sich Entfernens von Dichtung (25) und Ventilgehäuse (3) entgegen der Montagerichtung (M) formschlüssig ineinander eingreifen.

2. Wegeventil (1) nach Anspruch 1, wobei die Dichtungsaufnahme (26) und die Dichtung (25) derart aufeinander formabgestimmt sind, dass sich die Dichtung (25) und die Dichtungsaufnahme (26) in Bezug auf die Montagerichtung (M) widerhakenartig hintergreifen.

3. Wegeventil (1) nach Anspruch 1 oder 2, wobei die Dichtung (25) eine aus einem Stück damit hergestellte Widerhakenstruktur aufweist, mittels der die Dichtung (25) fest, insbesondere haftvermittlerfrei, an dem Ventilglied (5) oder dem Ventilgehäuse (3) angebracht ist.

4. Wegeventil (1) nach Anspruch 3, wobei die Widerhakenstruktur als insbesondere rotationsförmiger von der Dichtung (25) vorstehender Vorsprung gebildet ist, der einen Stegabschnitt insbesondere konstanten Durchmessers und einen gegenüber dem Stegabschnitt quer zur Längserstreckung des Vorsprungs vorstehenden, insbesondere umlaufenden, Halteabschnitt aufweist.

5. Wegeventil (1) nach Anspruch 4, wobei die Dichtung (25) wenigstens zwei, insbesondere eine Vielzahl von in einem insbesondere gleichmäßigen Abstand zueinander angeordnete, insbesondere gleich geformte, Vorsprünge aufweist, wobei insbesondere die Dichtung (25) als Dichtungsring realisiert ist.

6. Wegeventil (1) nach einem der vorstehenden Ansprüche, wobei die Dichtungsaufnahme (26) ringförmig, insbesondere ringnutförmig, ausgebildet ist und/oder wenigstens eine Formschlussöffnung (95) zum Empfangen des Vorsprungs, bezüglich der der wenigstens eine Vorsprung der Dichtung (25) formabgestimmt ist, aufweist.

7. Wegeventil (1) nach Anspruch 6, wobei die Formschlussöffnung (95) derart geformt ist, dass sich der Dichtungsvorsprung und die Dichtungsaufnahmeformschlussöffnung (95) in Bezug auf die Montagerichtung (M) der Dichtung (25) widerhakenartig hintergreifen.

8. Wegeventil (1) nach Anspruch 6 oder 7, wobei die Formschlussöffnung (95) eine dem Stegabschnitt der Dichtung (25) zugeordnete Stegaufnahme und eine dem Halteabschnitt zugeordnete, gegenüber der Stegaufnahme quer zur Längserstreckung der Formschlussöffnung (95) vorstehende, insbesondere umlaufende, Halteaufnahme aufweist.

9. Wegeventil (1) nach einem der vorstehenden Ansprüche, wobei die Dichtungsaufnahme (26) randnah in einem zum Einnehmen eines Dichtkontakts mit dem Ventilgehäuse (3) eingerichteten Dichtteil des Ventilglieds (5) oder fluidöffnungsnah in einer die wenigstens zwei Fluidöffnungen (7, 9, 10, 11) begrenzenden Ventilgehäusewand ausgebildet ist.

10. Wegeventil (1) nach einem der vorstehenden Ansprüche, wobei die Dichtung (25) so geformt ist, dass die Dichtung (25) an eine Innenkontur der Ventilgehäusewand formangepasst ist, insbesondere kontinuierlich und/oder vorsprungsfrei in die Wandungskontur übergeht.

11. Wegeventil (1) nach einem der vorstehenden Ansprüche, wobei die Dichtung (25) derart in der wenigstens einen Dichtungsaufnahme (26) angeordnet ist, dass eine Rotation der Dichtung (25) relativ zu der Dichtungsaufnahme (26) bezüglich der Stellachse des Ventilglieds (5) und/oder eine Translation der Dichtung (25) relativ zu der Dichtungsaufnahme (26) in Richtung der Stellachse verhindert sind/ist.

12. Wegeventil (1) nach Anspruch 11, wobei die Dichtung (25) und die Dichtungsaufnahme (26) einen Formschlusseingriff insbesondere in Form einer Feder-Nut-Verbindung (85) ausbilden.

13. Wegeventil (1) nach einem der vorstehenden Ansprüche, wobei die Dichtung (25) die Ventilgehäusewand großflächig, insbesondere wenigstens 50 %, wenigstens 60 %, wenigstens 70 % oder wenigstens 80 % der Ventilgehäusewand, ausgekleidet.

14. Wegeventil (1) nach einem der vorstehenden Ansprüche, wobei das Ventilglied (5) zwischen einem Schließzustand, in dem das Ventilglied (5) in einen Dichtkontakt mit dem Ventilgehäuse (3) gedrängt ist und in dem die Dichtung (25) aktiv ist, um eine der Fluidöffnungen (7, 9, 10, 11) fluiddicht zu verschließen, und einem Öffnungszustand, in dem das Ventilglied (5) von dem Ventilgehäuse (3) weg zurückversetzt ist und in dem die Dichtung (25) inaktiv ist, um die Fluidöffnung (7, 9, 10, 11) wenigstens teilweise zu öffnen.

15. KFZ-Fluidströmungsleitsystem, insbesondere KFZ-Thermomanagement-Fluidleitsystem, wie KFZ-Kühlkreislauf, umfassend ein nach einem der vorstehenden Ansprüche ausgebildetes Wegeventil (1).

## Claims

1. Directional control valve (1) for adjusting a fluid flow, such as a coolant flow, comprising:
- a valve housing (3) with at least two fluid openings, which are fluidically connected to a valve interior (81) delimited by the valve housing (3), and at least one seal receptacle;
- a valve member (5), which can be adjusted for closing and at least partially opening the at least two fluid openings (7, 9, 10, 11); and
- a seal (25), which is injected in an assembly direction (M) by means of an injection molding method from the valve interior (81) into the at least one seal receptacle (26) and is produced in one piece, **characterized in that** the seal (25) and the seal receptacle (26) engage in one another in a form-fitting manner counter to the assembly direction (M) in order to prevent a removal of the seal (25) and valve housing (3).

2. Directional control valve (1) according to claim 1, wherein the seal receptacle (26) and the seal (25) are matched to one another in terms of shape in such a way that the seal (25) and the seal receptacle (26) engage behind one another in a barb-like manner with respect to the assembly direction (M).

3. Directional control valve (1) according to claim 1 or 2, wherein the seal (25) has a barb structure produced in one piece therewith, by means of which the seal (25) is fixedly attached, in particular without adhesion promoter, to the valve member (5) or the valve housing (3).

4. Directional control valve (1) according to claim 3, wherein the barb structure is formed as an in particular rotationally shaped projection protruding from the seal (25), which projection has a web section of in particular constant diameter and an in particular circumferential holding section protruding with respect to the web section transversely to the longitudinal extent of the projection.

5. Directional control valve (1) according to claim 4, wherein the seal (25) has at least two, in particular a multiplicity of, in particular identically shaped, projections arranged at an in particular uniform distance from one another, wherein in particular the seal (25) is realized as a sealing ring.

6. Directional control valve (1) according to one of the preceding claims, wherein the seal receptacle (26) is annular, in particular annular groove-shaped, and/or has at least one form-fitting opening (95) for receiving the projection, with respect to which the at least one projection of the seal (25) is matched in terms of shape.

7. Directional control valve (1) according to claim 6, wherein the form-fitting opening (95) is shaped in such a way that the seal projection and the seal receptacle form-fitting opening (95) engage behind one another in a barb-like manner with respect to the assembly direction (M) of the seal (25).

8. Directional control valve (1) according to claim 6 or 7, wherein the form-fitting opening (95) has a web receptacle assigned to the web section of the seal (25) and an in particular circumferential holding receptacle assigned to the holding section and protruding with respect to the web receptacle transversely to the longitudinal extent of the form-fitting opening (95).

9. Directional control valve (1) according to one of the preceding claims, wherein the seal receptacle (26) is formed close to the edge in a sealing part of the valve member (5), which sealing part is set up to assume sealing contact with the valve housing (3), or close to the fluid opening in a valve housing wall delimiting the at least two fluid openings (7, 9, 10, 11).

10. Directional control valve (1) according to one of the preceding claims, wherein the seal (25) is shaped in such a way that the seal (25) is matched in terms of shape to an inner contour of the valve housing wall, in particular merges continuously and/or without projections into the wall contour.

11. Directional control valve (1) according to one of the preceding claims, wherein the seal (25) is arranged in the at least one seal receptacle (26) in such a way that rotation of the seal (25) relative to the seal receptacle (26) with respect to the actuating axis of the valve member (5) and/or translation of the seal (25) relative to the seal receptacle (26) in the direction of the actuating axis are/is prevented.

12. Directional control valve (1) according to claim 11, wherein the seal (25) and the seal receptacle (26) form a form-fitting engagement, in particular in the form of a tongue-and-groove connection (85).

13. Directional control valve (1) according to one of the preceding claims, wherein the seal (25) lines the valve housing wall over a large area, in particular at least 50%, at least 60%, at least 70% or at least 80% of the valve housing wall.

14. Directional control valve (1) according to one of the preceding claims, wherein the valve member (5) is movable between a closed state, in which the valve member (5) is forced into sealing contact with the valve housing (3) and in which the seal (25) is active in order to close one of the fluid openings (7, 9, 10, 11) in a fluid-tight manner, and an open state, in which the valve member (5) is set back away from the valve housing (3) and in which the seal (25) is inactive in order to at least partially open the fluid opening (7, 9, 10, 11).

15. Motor vehicle fluid flow guiding system, in particular motor vehicle thermal management fluid guiding system, such as motor vehicle cooling circuit, comprising a directional control valve (1) designed according to one of the preceding claims.

## Revendications

1. Soupape de distribution (1) pour le réglage d'un écoulement de fluide, comme un écoulement de fluide de refroidissement, comprenant :
- un boîtier de soupape (3) avec au moins deux ouvertures de fluides, qui sont reliées avec un espace interne de soupape (81) délimité par le boîtier de soupape (3) et au moins un logement de joint d'étanchéité ;
- un organe de soupape (5) qui peut être réglé pour la fermeture et l'ouverture au moins partielle des au moins deux ouvertures de fluides (7, 9, 10, 11) ; et
- un joint d'étanchéité (25) injecté dans une direction de montage (M) au moyen d'un procédé d'injection, à partir de l'espace interne de soupape (81) vers l'au moins un logement de joint d'étanchéité (26) et constitué d'une seule pièce,
**caractérisée en ce que**
le joint d'étanchéité (25) et le logement de joint d'étanchéité (26) s'emboîtent l'un dans l'autre par complémentarité de forme afin d'empêcher un éloignement du joint d'étanchéité (25) et du boîtier de soupape (3) à l'encontre de la direction de montage (M).

2. Soupape de distribution (1) selon la revendication 1, dans laquelle le logement de joint d'étanchéité (26) et le joint d'étanchéité (25) présentent des formes complémentaires de sorte que le joint d'étanchéité (25) et le logement de joint d'étanchéité (26) s'accrochent par l'arrière, par rapport à la direction de montage (M), à la manière de contre-crochets.

3. Soupape de distribution (1) selon la revendication 1 ou 2, dans laquelle le joint d'étanchéité (25) comprend une structure de contre-crochet réalisée d'une seule pièce, à l'aide de laquelle le joint d'étanchéité (25) est monté fermement, plus particulièrement sans promoteur d'adhérence, sur l'organe de soupape (5) ou le boîtier de soupape (3).

4. Soupape de distribution (1) selon la revendication 3, dans laquelle la structure de contre-crochet est réalisée comme une saillie dépassant, plus particulièrement sous une forme rotative, du joint d'étanchéité (25), qui comprend une portion d'entretoise d'un diamètre plus particulièrement constant et une portion de maintien dépassant par rapport à la portion d'entretoise transversalement par rapport à l'extension longitudinale de la saillie, plus particulièrement circulaire.

5. Soupape de distribution (1) selon la revendication 4, dans laquelle le joint d'étanchéité (25) comprend au moins deux, plus particulièrement une pluralité de saillies disposées à des intervalles réguliers entre elles, plus particulièrement de même forme, dans lequel, plus particulièrement, le joint d'étanchéité (25) est conçu comme une bague d'étanchéité.

6. Soupape de distribution (1) selon l'une des revendications précédentes, dans laquelle le logement de joint d'étanchéité (26) présente une forme annulaire, plus particulièrement une forme de rainure annulaire et/ou comprend au moins une ouverture à complémentarité de forme (95), pour la réception de la saillie, dont la forme est adaptée à l'au moins une saillie du joint d'étanchéité (25).

7. Soupape de distribution (1) selon la revendication 6, dans laquelle l'ouverture à complémentarité de forme (95) présente une forme telle que la saillie du joint d'étanchéité et l'ouverture à complémentarité de forme du logement de joint d'étanchéité (25) s'accrochent par l'arrière, par rapport à la direction de montage (M), à la manière de contre-crochets.

8. Soupape de distribution (1) selon la revendication 6 ou 7, dans laquelle l'ouverture à complémentarité de forme (95) comprend un logement d'entretoise correspondant à la portion d'entretoise du joint d'étanchéité (25) et un logement de maintien correspondant à la portion de maintien, dépassant du logement d'entretoise transversalement par rapport à l'extension longitudinale de l'ouverture à complémentarité de forme (95), plus particulièrement circulaire.

9. Soupape de distribution (1) selon l'une des revendications précédentes, dans laquelle le logement de joint d'étanchéité (26) est réalisé près du bord, dans une partie étanche de l'organe de soupape (5), conçu pour l'établissement d'un contact étanche avec le boîtier de soupape (3) ou près de l'ouverture de fluide dans une paroi du boîtier de soupape délimitant les au moins deux ouvertures de fluides (7, 9, 10, 11).

10. Soupape de distribution (1) selon l'une des revendications précédentes, dans laquelle le joint d'étanchéité (25) présente une forme telle que le joint d'étanchéité (25) est adapté à un contour interne de la paroi du boîtier de soupape, plus particulièrement se raccorde de manière continue et/ou sans saillie au contour de la paroi.

11. Soupape de distribution (1) selon l'une des revendications précédentes, dans laquelle le joint d'étanchéité (25) est disposé dans l'au moins un logement de joint d'étanchéité (26) de sorte qu'une rotation du joint d'étanchéité (25) par rapport au logement de joint d'étanchéité (26) autour de l'axe de réglage de l'organe de soupape (5) et/ou une translation du joint d'étanchéité (25) par rapport au logement de joint d'étanchéité (26) en direction de l'axe de réglage est empêchée.

12. Soupape de distribution (1) selon la revendication 11, dans laquelle le joint d'étanchéité (25) et le logement de joint d'étanchéité (26) forment un emboîtement par complémentarité de forme plus particulièrement sous la forme d'une liaison par rainure et languette (85).

13. Soupape de distribution (1) selon l'une des revendications précédentes, dans laquelle le joint d'étanchéité (25) recouvre une grande surface de la paroi du boîtier de soupape, plus particulièrement au moins 50 %, au moins 60 %, au moins 70 % ou au moins 80 % de la paroi du boîtier de soupape.

14. Soupape de distribution (1) selon l'une des revendications précédentes, dans laquelle l'organe de soupape (5) est comprimé entre un état de fermeture, dans lequel l'organe de soupape (5) est comprimé en contact étanche avec le boîtier de soupape (3) et dans lequel le joint d'étanchéité (25) est actif, afin de fermer une des ouvertures de fluides (7, 9, 10, 11) de manière étanche aux fluides, et un état d'ouverture dans lequel l'organe de soupape (5) est déplacé à nouveau loin du boîtier de soupape (3) et dans lequel le joint d'étanchéité (25) est inactif, afin d'ouvrir au moins partiellement l'ouverture de fluide (7, 9, 10, 11).

15. Système de guidage d'écoulement de fluides de poids-lourd, plus particulièrement système de guidage de fluides de gestion thermique de poids-lourd, comme un circuit de refroidissement de poids-lourd, comprenant une soupape de distribution (1) conçue selon l'une des revendications précédentes.
